(19) Europäisches Patentamt
European Patent Office
Office européen des brevets

(11) **EP 4 480 935 A1**

(12) **EUROPEAN PATENT APPLICATION**
published in accordance with Art. 153(4) EPC

(43) Date of publication:
**25.12.2024 Bulletin 2024/52**

(21) Application number: **23756448.9**

(22) Date of filing: **16.02.2023**

(51) International Patent Classification (IPC):
**C04B 35/488** (2006.01)    **A61C 5/77** (2017.01)
**A61C 13/083** (2006.01)

(52) Cooperative Patent Classification (CPC):
**A61C 5/77; A61C 13/083; C04B 35/488**

(86) International application number:
**PCT/JP2023/005481**

(87) International publication number:
**WO 2023/157923 (24.08.2023 Gazette 2023/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.02.2022 JP 2022024064**

(71) Applicant: **Tosoh Corporation
Yamaguchi 746-8501 (JP)**

(72) Inventors:
• **USHIO, Yuki
Shunan-shi, Yamaguchi 746-8051 (JP)**
• **AZECHI, Sho
Shunan-shi, Yamaguchi 746-8051 (JP)**
• **NAGAYAMA, Hitoshi
Shunan-shi, Yamaguchi 746-8051 (JP)**

(74) Representative: **Müller-Boré & Partner
Patentanwälte PartG mbB
Friedenheimer Brücke 21
80639 München (DE)**

(54) **CALCINED OBJECT AND SINTERED OBJECT OF ZIRCONIA**

(57)    Provided is at least one of a sintered body having gradations of translucency and a color tone and being capable of providing a visual impression close to that of natural teeth and a calcined body that provides such a sintered body. The calcined body and the sintered body are respectively a calcined body of zirconia and a sintered body of zirconia that have less warpage even after being subjected to heat treatment such as sintering or calcination. The sintered body comprises zirconia, wherein the zirconia contains (i) stabilizing element-containing zirconia or (ii) zirconia containing stabilizing element-containing zirconia and a coloring element, the sintered body has three or more regions stacked in a layered manner, two adjacent regions among the regions differ from each other in at least one of stabilizing element content and coloring element content, and a difference between the stabilizing element content in a first region located at one end among the stacked regions and the stabilizing element content in a second region located at the other end is 2.0 mol% or less.

**FIG. 1**

## Description

Technical Field

The present disclosure relates to a calcined body of zirconia and a sintered body of zirconia which are zirconia layered bodies.

Background Art

Sintered bodies of zirconia ($ZrO_2$) are produced by forming, calcining and sintering a raw material powder that mainly contains zirconia. The raw material powder is thermally shrunk and densified by heat treatment such as sintering and calcination, and the behavior during the heat treatment varies depending on the characteristics of the raw material powder, in particular, the composition of the raw material powder.

Zirconia makes up most part of the raw material powder. Nevertheless, even in raw material powders that differ only in their content of an additive of less than 0.1 mass%, the thermal shrinkage behaviors of the two powders differ significantly. In the case of heat-treating a green body prepared by stacking layers of raw material powders with such a slight difference in the composition, problems such as partial peeling of the layers or distortion may occur. The above-mentioned problems may occur even in the same zirconia, when an additive is added to the zirconia. To heat-treat a green body without causing such problems, special adjustment or treatment has been required (for example, PTL 1 and PTL 2).

PTL 1 discloses that raw material powders are coated with a dopant to adjust the composition and thermal shrinkage behavior thereof, and the resulting raw material powders are formed to obtain a distortion-free sintered body composed of a layered body with different color tones. PTL 2 discloses that forming is performed by stacking layers while applying vibrations so as to form a boundary layer in which powders of an upper layer and a lower layer are mixed, to thereby obtain a sintered body composed of a layered body that includes layers having different contents of coloring elements and has a change in color tone.

However, in the layered bodies disclosed in PTL 1 and PTL 2, zirconia, which makes up most part of the raw material powders, have the same composition, and the layered bodies also have the same texture, which is mainly derived from translucency of zirconia. Accordingly, the layered bodies have a different texture compared to natural teeth, which have a texture derived from a change in translucency.

In view of the above, it is desirable to provide a zirconia layered body having gradations of translucency and a color tone and capable of providing an impression close to that of natural teeth.

PTL 3 discloses a layered body in which a plurality of zirconia composition layers having different chemical compositions are stacked.

Citation List

Patent Literature

PTL 1: U.S. Patent Application Publication No. 2016/0157971
PTL 2: U.S. Patent Application Publication No. 2014/0328746
PTL 3: U.S. Patent Application Publication No. 2015/0173869

Summary of Invention

Technical Problem

In PTL 3, layers in which an amount of yttrium or a coloring element is changed in a stepwise manner from the lowermost layer to the uppermost layer are stacked such that the color tone and the transmittance gradually change.

However, when layers having different compositions are stacked such that the color tone and the transmittance gradually change, the shrinkage ratio changes significantly between the uppermost layer and the lowermost layer due to a significant difference in the composition between the uppermost layer and the lowermost layer. Heat treatment of a green body having such a large difference in the shrinkage ratio between the lowermost layer and the uppermost layer provides a calcined body or sintered body that is significantly warped toward the side with higher shrinkage ratio.

In view of the above, an object of the present disclosure is to provide at least one of a sintered body having gradations of translucency and a color tone and being capable of providing a visual impression close to that of natural teeth and a calcined body that provides such a sintered body, in which the sintered body and the calcined body are respectively a sintered body of zirconia and a calcined body of zirconia that have less warpage even after being subjected to heat treatment such as sintering or calcination.

Another object of the present disclosure is to provide at least one of a calcined body and a sintered body suitable for dental prosthetic materials and methods for producing the same.

Solution to Problem

The inventors of the present invention have focused on the relationship between a stabilizing element content in a zirconia composition contained in the lowermost layer and a stabilizing element content in a zirconia composition contained in the uppermost layer or the relationship between the shrinkage ratio of the lowermost layer and the shrinkage ratio of the uppermost layer, and found that a sintered body with less warpage and a calcined body that provides such a sintered body are obtained by controlling them to specific relationships, although the sintered body and the calcined body have a multilayer structure such that translucency and a color tone gradually change as in natural teeth.

Specifically, the present invention is as described in CLAIMS below, and the gist of the present disclosure is as follows.

[1] A sintered body of zirconia,

wherein the zirconia contains (i) stabilizing element-containing zirconia or (ii) zirconia containing stabilizing element-containing zirconia and a coloring element,
the sintered body has three or more regions stacked in a layered manner, two adjacent regions among the regions differ from each other in at least one of stabilizing element content and coloring element content, and
a difference between the stabilizing element content in a first region located at one end among the stacked regions and the stabilizing element content in a second region located at the other end is 2.0 mol% or less.

[2] The sintered body according to [1], wherein a third region stacked between the first region and the second region in a layered manner includes one or more regions.

[3] The sintered body according to [2], wherein the third region includes two or more regions, and an increasing or decreasing tendency of at least one of translucency and a color tone does not change in a stacking direction from the first region to the third region or from the second region to the third region.

[4] A sintered body of zirconia,

wherein the zirconia contains (i) stabilizing element-containing zirconia or (ii) zirconia containing stabilizing element-containing zirconia and a coloring element,
the sintered body has three or more regions stacked in a layered manner, two adjacent regions among the regions differ from each other in at least one of stabilizing element content and coloring element content, and
a difference between a shrinkage ratio of the sintered body in a first region located at one end among the stacked regions and a shrinkage ratio of the sintered body in a second region located at the other end (difference in shrinkage ratio) is 0.4% or less.

[5] The sintered body according to [4], wherein a third region stacked between the first region and the second region in a layered manner includes one or more regions.

[6] The sintered body according to [5], wherein the third region includes two or more regions, and an increasing or decreasing tendency of at least one of translucency and a color tone does not change in a stacking direction from the first region to the third region or from the second region to the third region.

[7] A calcined body of a zirconia composition,

wherein the zirconia composition contains (iii) a stabilizing element-containing zirconia composition having a necking structure or (iv) a zirconia composition containing stabilizing element-containing zirconia having a necking structure and a coloring element,
the calcined body has three or more regions stacked in a layered manner, two adjacent regions among the regions differ from each other in at least one of stabilizing element content and coloring element content, and
a difference between the stabilizing element content in a first region located at one end among the stacked regions and the stabilizing element content in a second region located at the other end is 2.0 mol% or less.

[8] The calcined body according to [7], wherein a third region stacked between the first region and the second region in a layered manner includes one or more regions.

[9] The calcined body according to [8], wherein the third region includes two or more regions, and an increasing or decreasing tendency of a color tone does not change in a stacking direction from the first region to the third region or from the second region to the third region.

[10] A calcined body of a zirconia composition,

wherein the zirconia composition contains (iii) a stabilizing element-containing zirconia composition having a necking structure or (iv) a zirconia composition containing stabilizing element-containing zirconia having a necking structure and a coloring element,

the calcined body has three or more regions stacked in a layered manner, two adjacent regions among the regions differ from each other in at least one of stabilizing element content and coloring element content, and

a difference between a shrinkage ratio of the calcined body in a first region located at one end among the stacked regions and a shrinkage ratio of the calcined body in a second region located at the other end (difference in shrinkage ratio) is 0.4% or less.

[11] The calcined body according to [10], wherein a third region stacked between the first region and the second region in a layered manner includes one or more regions.

[12] The calcined body according to [11], wherein the third region includes two or more regions, and an increasing or decreasing tendency of a color tone does not change in a stacking direction from the first region to the third region or from the second region to the third region.

[13] A method for producing the sintered body according to any one of [1] to [6], the method comprising:

a step of sintering, at 1,200°C or higher and 1,600°C or lower, a green body in which three or more powder composition layers composed of a zirconia raw material powder containing stabilizing element-containing zirconia and, if a coloring element is contained, the coloring element are stacked.

[14] A method for producing the sintered body according to any one of [1] to [6], the method comprising:

a step of calcining, at 800°C or higher and lower than 1,200°C, a green body in which three or more powder composition layers composed of a zirconia raw material powder containing stabilizing element-containing zirconia and, if a coloring element is contained, the coloring element are stacked to obtain a calcined body; and a step of sintering the calcined body at 1,200°C or higher and 1,600°C or lower.

[15] A method for producing the calcined body according to any one of [7] to [12], the method comprising:

a step of calcining, at 800°C or higher and lower than 1,200°C, a green body in which three or more powder composition layers composed of a zirconia raw material powder containing stabilizing element-containing zirconia and, if a coloring element is contained, the coloring element are stacked.

[16] A dental material comprising the sintered body according to any one of [1] to [6].

[17] A dental material comprising the calcined body according to any one of [7] to [12].

Advantageous Effects of Invention

The present disclosure can provide at least one of a sintered body having gradations of translucency and a color tone and being capable of providing a visual impression close to that of natural teeth and a calcined body that provides such a sintered body, in which the sintered body and the calcined body are respectively a sintered body of zirconia and a calcined body of zirconia that have less warpage even after being subjected to heat treatment such as sintering or calcination.

The present disclosure can provide at least one of a calcined body and a sintered body suitable for dental prosthetic materials and methods for producing the same.

Brief Description of Drawings

[Fig. 1] A schematic view illustrating a section of a sintered body having a structure in which three zirconia layers are stacked.

[Fig. 2] A schematic view illustrating a section of a sintered body having a structure in which four zirconia layers are stacked.

[Fig. 3] Schematic views for explaining uniaxial press forming in a forming step.

[Fig. 4] A schematic view for explaining a CIP process in the forming step.

[Fig. 5] A schematic view illustrating a method for measuring warpage.

[Fig. 6] A schematic view illustrating a method for measuring three-point bending strength.

[Fig. 7] A schematic view illustrating zirconia with a necking structure.

[Fig. 8] Schematic views for explaining uniaxial press forming in a forming step in preparing a layered body in Examples.

[Fig. 9] A schematic view for explaining a CIP process in the forming step in preparing a layered body in Examples. Description of Embodiments

A sintered body and a calcined body of zirconia according to one embodiment of the present disclosure will be described in detail below. The description of constituent components described below is an example of an embodiment of the present disclosure, and the present disclosure is not limited to the contents thereof.

In this description, a layered body can include any form of a sintered body, a calcined body and a green body. The layered body of the present embodiment may be, for example, a sintered body serving as a dental prosthesis or a calcined body serving as a precursor of the dental prosthesis. For example, in the present embodiment, when the layered body is a sintered body, the sintered body has a structure in which regions composed of "zirconia containing stabilizing element-containing zirconia, which is zirconia in which a stabilizing element is dissolved and, and if a coloring element is contained, the coloring element" are stacked in a layered manner, when the layered body is a calcined body, the calcined body has a structure in which regions composed of "a zirconia composition containing stabilizing element-containing zirconia that exhibits a necking structure, and if a coloring element is contained, the coloring element" are stacked in a layered manner, and when the layered body is a green body, the green body has a structure in which regions composed of "a powder composition containing stabilizing element-containing zirconia and, if a coloring element is contained, the coloring element" are stacked in a layered manner.

By stacking regions where at least one of a stabilizing element content and a coloring element content varies in a layered manner, translucency and a color tone (for example, a color tone represented by the L*a*b* color system) can be changed in a direction in which the layers are stacked (hereinafter, also referred to as a "stacking direction") to form gradations of the translucency and the color tone.

In the present disclosure, a state that regions "are stacked in a layered manner" is specified. This means that a plurality of regions composed of zirconia having different compositions due to the difference in the stabilizing element content and/or the coloring element contents are present in a sintered body or a calcined body, and the plurality of regions are present in the stacking direction. The present disclosure does not specify a state of "stacking of layers" in which an interface between a layer and a layer can be visually confirmed and a stacking state of each layer can be confirmed. In a sintered body and a calcined body of the present embodiment, visual confirmation of a stacking state of each layer is not required, and even if there is no interface that can be visually confirmed, it corresponds to the state that regions "are stacked in a layered manner" in the present disclosure as long as a plurality of regions having different compositions are present in one direction.

The calcined body or the sintered body is obtained by stacking powder composition layers composed of zirconia raw material powders containing stabilizing element-containing zirconia and, if a coloring element is contained, the coloring element, subsequently performing forming to prepare a green body and subsequently calcining or sintering the green body. The "regions" in the sintered body or the calcined body are formed by calcining or sintering the powder composition layers in the green body. That is, each "region" in the sintered body or the calcined body substantially corresponds to each powder composition layer in the green body. Accordingly, in the description of a multilayer structure of a layered bodies such as a sintered body or a calcined body in this description, when each layer constituting a lamination is explained, a "region" in a sintered body or a calcined body is read as a "layer" constituting a multilayer structure of the calcined body or the sintered body.

In this description, when a plurality preferred lower limit values and a plurality of upper limit values are listed as a preferred condition range related to any requirement, these upper limit values and lower limit values may be set in any combination in the interpretation of the preferred condition range. For example, when it is stated that, as a preferred range of a thickness of a layer, the lower limit value is 1 mm or more, more preferably 2 mm or more, and on the other hand, the upper limit value is 20 mm or less, more preferably 15 mm or less, a preferred embodiment of the thickness of the layer is, for example, 1 mm or more and 20 mm or less, 1 mm or more and 15 mm or less, 2 mm or more and 20 mm or less or 2 mm or more and 15 mm or less.

A sintered body will be described below.

(Sintered body)

A sintered body according to the present embodiment is

a sintered body of zirconia,
in which the zirconia contains (i) stabilizing element-containing zirconia or (ii) zirconia containing stabilizing element-containing zirconia and a coloring element.

The zirconia contains (i) stabilizing element-containing zirconia. The (i) stabilizing element-containing zirconia may further contain a coloring element. In such a case, the zirconia contains (ii) zirconia containing stabilizing element-containing zirconia and a coloring element.

The sintered body has three or more regions stacked in a layered manner, two adjacent regions among the regions differ from each other in at least one of stabilizing element content and coloring element content, and

a difference between the stabilizing element content in a first region located at one end among the stacked regions and the stabilizing element content in a second region located at the other end is 2.0 mol% or less.

A sintered body according to another embodiment of the present embodiment is

a sintered body of zirconia,
in which the zirconia contains (i) stabilizing element-containing zirconia or containing (ii) zirconia containing stabilizing element-containing zirconia and a coloring element.

The sintered body has three or more regions stacked in a layered manner, two adjacent regions among the regions differ from each other in at least one of stabilizing element content and coloring element content, and a difference between a shrinkage ratio of the sintered body in a first region located at one end among the stacked regions and a shrinkage ratio of the sintered body in a second region located at the other end (difference in shrinkage ratio) is 0.4% or less.

The sintered body is a layered body composed of a sintered microstructure. In the present embodiment, the sintered microstructure is mainly a structure composed of zirconia at the sintering later stage.

The sintered body of the present embodiment has zirconia layers composed of stabilizing element-containing zirconia or, if a coloring element is contained, zirconia layers composed of zirconia containing stabilizing element-containing zirconia and the coloring element (hereinafter, these zirconia layers are also collectively simply referred to as "zirconia layers"). The zirconia layers are mainly composed of crystal grains of zirconia containing a stabilizing element. Accordingly, the sintered body of the present embodiment can be regarded as layers of zirconia composed of zirconia crystal grains containing a stabilizing element or, if a coloring element is contained, can also be regarded as a layered body including three or more layers of zirconia containing the coloring element and zirconia composed of zirconia crystal grains containing a stabilizing element.

Note that, in this description, the zirconia layers are also referred to as sintered body layers.

<Multilayer structure>

A sintered body having a structure in which three zirconia layers (sintered body layers) are stacked will be described below.

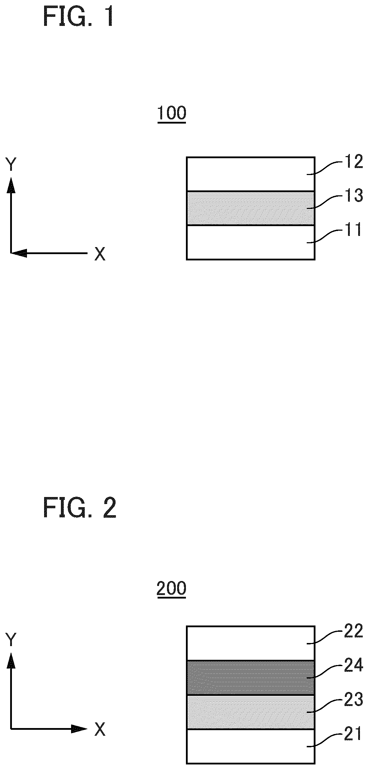

Fig. 1 is a schematic view illustrating an example of a multilayer structure of a sintered body of the present embodiment.

Fig. 1 illustrates a section of a sintered body (100) having a structure in which three zirconia layers are stacked.

Each of the three layers in Fig. 1 corresponds to a "region" described in the present disclosure. In Fig. 1, the stacking direction is shown in the Y-axis direction, and a direction in which each layer extends (hereinafter, also referred to as a "horizontal direction") is shown in the X-axis direction.

The sintered body (100) includes a first zirconia layer (hereinafter, also referred to as a "first layer") (11), a second zirconia layer (hereinafter, also referred to as a "second layer") (12) and a third zirconia layer (hereinafter, also referred to as a "third layer") (13) and has a structure in which the first layer (11), the third layer (13) and the second layer (12) are stacked in this order.

In the layers (regions) represented by the first layer (11), the third layer (13) and the second layer (12), the composition of zirconia is uniform within each layer (region), but the compositions of zirconia are different between layers adjacent to each other.

Each of the layers (regions) of the first layer (11), the third layer (13) and the second layer (12) may further contain a coloring element besides stabilizing element-containing zirconia. The coloring element may be contained in all the three layers, namely, the first layer (11), the third layer (13) and the second layer (12) or may be contained in only some of the three layers.

If the coloring element is contained in none of the first layer (11), the third layer (13) and the second layer (12), each layer (each region) represented by the first layer (11), the third layer (13), or the second layer (12) differs from an adjacent layer (adjacent region) in the stabilizing element content.

If the coloring element is contained in all or some of the first layer (11), the third layer (13) and the second layer (12), each layer (each region) represented by the first layer (11), the third layer (13) or the second layer (12) differs from an adjacent layer (adjacent region) in at least one of the stabilizing element content and the coloring element content.

A sintered body of the present embodiment will be specifically described with reference to Fig. 1 by taking, as an example, a case where a coloring element is contained in the three zirconia layers illustrated in Fig. 1.

The sintered body (100) includes a first zirconia layer (first layer) (11) containing stabilizing element-containing zirconia and a coloring element, a second zirconia layer (second layer) (12) containing stabilizing element-containing zirconia and a coloring element and a third zirconia layer (third layer) (13) containing stabilizing element-containing zirconia and a coloring element and has a structure in which the first layer (11), the third layer (13) and the second layer (12) are stacked in this order.

In the layers (regions) represented by the first layer (11), the third layer (13) and the second layer (12), the composition of zirconia is uniform within each layer (region). Accordingly, in the X-direction of Fig. 1, changes in translucency and a color tone based on the difference in at least one of the stabilizing element content and the coloring element content are not observed.

On the other hand, in the layers (regions) represented by the first layer (11), the third layer (13) and the second layer (12), the compositions of zirconia are different between layers adjacent (regions adjacent) to each other. That is, at least one of the stabilizing element content and the coloring element content is different between layers adjacent (regions adjacent) to each other.

The expression "the compositions of zirconia are different between adjacent layers" refers to, for example, a case where the stabilizing element contents of layers adjacent to each other do not vary, but only the coloring element contents vary, a case where the coloring element contents of layers adjacent to each other do not vary, but only the stabilizing element contents vary, and a case where the stabilizing element contents and the coloring element contents vary between layers adjacent to each other.

With reference to the example of Fig. 1, at least one of the stabilizing element content and the coloring element content in the zirconia layer of the third layer (13) is different from at least one of the stabilizing element content and the coloring element content in the zirconia layer of the adjacent first layer (11) and is different from at least one of the stabilizing element content and the coloring element content in the zirconia layer of the adjacent second layer (12).

In the layers (regions) represented by the first layer (11), the third layer (13) and the second layer (12), at least one of the stabilizing element content and the coloring element content is different from that in a layer adjacent (region adjacent) to each other; however, in order to achieve desired changes in the translucency and the color tone, the stabilizing element content and the coloring element content are preferably different from those in a layer adjacent (region adjacent) to each other. That is, the stabilizing element content and the coloring element content in the zirconia layer of the third layer (13) are preferably different from the stabilizing element content and the coloring element content in the zirconia layer of the adjacent first layer (11) and different from the stabilizing element content and the coloring element content in the zirconia layer of the adjacent second layer (12).

With the structure in which zirconia layers containing zirconia with different contents of at least one of the stabilizing element and the coloring element between adjacent layers are stacked, it is possible to form a sintered body in which changes in the translucency and the color tone based on the difference in the stabilizing element content and/or the coloring element content can be visually confirmed in the Y-direction of Fig. 1.

Fig. 1 illustrates a state of the sintered body (100) in which the first layer and the third layer, or the third layer and the second layer are in contact with each other via an interface. However, the sintered body of the present embodiment may include layers stacked without having a visible interface, and furthermore, the interface between the layers is not limited to a linear interface.

The sintered body of the present embodiment has a structure in which three or more zirconia layers containing stabilizing element-containing zirconia and, if a coloring element is contained, the coloring element are stacked, and may have a structure in which four or more zirconia layers, and furthermore, five or more zirconia layers are stacked. An increase in the number of layers provides a sintered body composed of a layered body in which detailed changes in texture can be visually recognized. To achieve a texture more similar to that of natural teeth, the sintered body of the present embodiment may have, for example, a structure in which three or more and ten or less zirconia layers, three or more and six or less zirconia layers, four or more and seven or less zirconia layers or four or more and six or less zirconia layers are stacked.

A zirconia layer (hereinafter, also referred to as an "intermediate layer") other than the first layer and the second layer may be provided between the first layer and the second layer, and the sintered body of the present embodiment may include a plurality of intermediate layers. Specifically, a third region (intermediate layer) stacked between the first region and the second region in a layered manner may include not only one region but also two or more regions.

The intermediate layers may be stacked in any order; however, for example, when a plurality of intermediate layers (an intermediate layer adjacent to the first layer is also referred to as a "third layer", and the second or higher intermediate layer is also referred to as a "fourth layer", a "fifth layer ", etc., in the stacking direction from the intermediate layer adjacent to the third layer) are provided, the sintered body of the present embodiment preferably has a structure in which zirconia layers are stacked such that a change in at least one of the stabilizing element content and the coloring element content in the stacking direction is constant, that is, has a structure in which zirconia layers are stacked such that the at least one of the contents increases (or decreases). In the present embodiment, a structure in which an intermediate layer is sandwiched between the first layer and the second layer is the structure in which an intermediate layer is located between the first layer and the second layer in the stacking direction, and an example in which the first layer, the third layer,

and the second layer are stacked in this order is as described above with reference to Fig. 1. A case where an intermediate layer has a plurality of layers will be described below with reference to Fig. 2. Note that, in the present embodiment, first, second, third, ⋯ are numbers that are given for convenience of description, and a sequence such as the order of stacking and the state of stacking are not limited to the cases illustrated in Figs. 1 and 2.

Fig. 2 is a schematic view illustrating another example of the structure of the sintered body of the present embodiment.

Fig. 2 illustrates a section of a sintered body (200) having a structure in which four zirconia layers are stacked. The sintered body (200) has a structure in which, in addition to a first layer (21) and a second layer (22), a third layer (23) and a fourth layer (24) serving as intermediate layers are stacked.

Each of the layers (regions) of the first layer (21), the third layer (23), the fourth layer (24) and the second layer (22) may further contain a coloring element besides stabilizing element-containing zirconia. The coloring element may be contained in all the four layers, namely, the first layer (21), the third layer (23), the fourth layer (24) and the second layer (22) or may be contained in only some of the four layers.

If the coloring element is contained in none of the first layer (21), the third layer (23), the fourth layer (24) and the second layer (22), each layer (each region) represented by the first layer (21), the third layer (23), the fourth layer (24) or the second layer (22) differs from an adjacent layer (adjacent region) in the stabilizing element content.

If the coloring element is contained in all or some of the first layer (21), the third layer (23), the fourth layer (24) and the second layer (22), each layer (each region) represented by the first layer (21), the third layer (23), the fourth layer (24) or the second layer (22) differs from an adjacent layer (adjacent region) in at least one of the stabilizing element content and the coloring element content.

A description will be made by taking, as an example, a sintered body in a case where a coloring element is contained in the four zirconia layers illustrated in Fig. 2.

The sintered body (200) includes a first zirconia layer (first layer) (21) containing stabilizing element-containing zirconia and a coloring element, a second zirconia layer (second layer) (22) containing stabilizing element-containing zirconia and a coloring element, a third zirconia layer (third layer) (23) containing stabilizing element-containing zirconia and a coloring element and a fourth zirconia layer (fourth layer) (24) containing stabilizing element-containing zirconia and a coloring element and has a structure in which the first layer (21), the third layer (23), the fourth layer (24) and the second layer (22) are stacked in this order.

In the layers (regions) represented by the first layer (21), the third layer (23), the fourth layer (24) and the second layer (22), the compositions of zirconia are different between layers adjacent (regions adjacent) to each other. That is, at least one of the stabilizing element content and the coloring element content is different between layers adjacent (regions adjacent) to each other.

At least one of the stabilizing element content and the coloring element content in the zirconia layer of the third layer (23) is different from at least one of the stabilizing element content and the coloring element content in the zirconia layer of the adjacent first layer (21) and is different from at least one of the stabilizing element content and the coloring element content in the zirconia layer of the adjacent fourth layer (24). At least one of the stabilizing element content and the coloring element content in the zirconia layer of the fourth layer (24) is different from at least one of the stabilizing element content and the coloring element content in the zirconia layer of the adjacent third layer (23) and is also different from at least one of the stabilizing element content and the coloring element content in the zirconia layer of the adjacent second layer (22).

In the layers (regions) represented by the first layer (21), the third layer (23), the fourth layer (24) and the second layer (22), at least one of the stabilizing element content and the coloring element content is different from that in a layer adjacent (region adjacent) to each other; however, in order to achieve desired changes in the translucency and the color tone, the stabilizing element content and the coloring element content are preferably different from those in a layer adjacent (region adjacent) to each other. That is, the stabilizing element content and the coloring element content in the zirconia layer of the third layer (23) are preferably different from the stabilizing element content and the coloring element content in the zirconia layer of the adjacent first layer (21) and different from the stabilizing element content and the coloring element content in the zirconia layer of the adjacent fourth layer (24). The stabilizing element content and the coloring element content in the zirconia layer of the fourth layer (24) are preferably different from the stabilizing element content and the coloring element content in the zirconia layer of the adjacent third layer (23) and different from the stabilizing element content and the coloring element content in the zirconia layer of the adjacent second layer (22).

When the third region (intermediate layer) includes two or more regions, zirconia layers are preferably stacked such that an increasing or decreasing tendency of at least one of translucency and a color tone does not change in the stacking direction.

That is, when a plurality of zirconia layers such as a fourth layer and a fifth layers are included, the zirconia layers are preferably stacked such that an increasing or decreasing tendency of at least one of translucency and a color tone does not change in the stacking direction. Particularly preferred is a structure in which the zirconia layers are stacked such that at least one of the stabilizing element content and the coloring element content changes evenly in the stacking direction. This enables the formation of gradations of translucency and a color tone based on the difference in at least one of the stabilizing element content and the coloring element content.

However, in the present disclosure, as described in the sections of <<Form (A)>> and << Form (B)>> of <<Features of multilayer structure>> below, values of the amounts of stabilizing element or the shrinkage ratios of, among the stacked layers, a layer located at one end (that is, one region serving as the uppermost layer or the lowermost layer in the stacking direction) and a layer located at the other end (that is, the other region serving as the uppermost layer or the lowermost layer in the stacking direction) are close to each other. Accordingly, in a case of a sintered body in which four or more zirconia layers are stacked in the present disclosure, in some cases, the layer located at one end or the layer located at the other end has an increasing or decreasing tendency in at least one of the translucency and the color tone opposite to the increasing or decreasing tendency of other layers in the stacking direction. However, such a form is also included in the present disclosure.

Such a form is more specifically described as (a) below or (b) below.

(a) When the third region includes two or more regions, the compositions of the layers can be such that the increasing or decreasing tendency in at least one of the translucency and the color tone does not change in the stacking direction from the first region to the third region. Specifically, in Fig. 2, the compositions of the layers can be such that the increasing or decreasing tendency in at least one of the translucency and the color tone does not change from the first layer (corresponding to the first region) (21) to the third layer (23) and the fourth layer (24) that serve as an intermediate layer (corresponding to the third region). This enables the formation of gradations of the translucency and the color tone similar to those of natural teeth. A second layer (corresponding to the second region) (22) is stacked on the fourth layer (24). The second layer (22) is a layer that exhibits a value close to the stabilizing element content in the first layer or exhibits a value close to the shrinkage ratio of the first layer. Thus, by stacking the second layer (22) having at least one of the stabilizing element content and the shrinkage ratio close to that of the first layer, the increasing or decreasing tendency in at least one of the translucency and the color tone exhibited from the first layer (21) to the fourth layer (24) may be reversed in some cases. However, in such a case, for example, in processing into a shape of a dental product, such as a crown shape, adjustment is performed such that the crown shape is processed in a stacking range in which desired gradations are formed.

(b) When the third region includes two or more regions, the compositions of the layers can be such that the increasing or decreasing tendency in at least one of the translucency and the color tone does not change in the stacking direction from the second region to the third region. Specifically, in Fig. 2, the compositions of the layers can be such that the increasing or decreasing tendency in at least one of the translucency and the color tone does not change from the second layer (corresponding to the second region) (22) to the fourth layer (24) and the third layer (23) that serve as an intermediate layer (corresponding to the third region). This enables the formation of gradations of the translucency and the color tone similar to those of natural teeth. A first layer (corresponding to the first region) (21) is stacked under the third layer (23). The first layer (21) is a layer that exhibits a value close to the stabilizing element content in the second layer or exhibits a value close to the shrinkage ratio of the second layer. Thus, by stacking the first layer (21) having at least one of the stabilizing element content and the shrinkage ratio close to that of the second layer, the increasing or decreasing tendency in at least one of the translucency and the color tone exhibited from the second layer (22) to the third layer (23) may be reversed in some cases. However, in such a case, for example, in processing into a shape of a dental product, such as a crown shape, adjustment is performed such that the crown shape is processed in a stacking range in which desired gradations are formed.

<Features of multilayer structure>

Preferred embodiments of the sintered body according to the present disclosure include a sintered body described in a form (A) below and a sintered body described in a form (B) below.

<<Form (A)>>

In the sintered body of the present embodiment, the difference between the stabilizing element content in a first region located at one end among the stacked regions and the stabilizing element content in a second region located at the other end is 2.0 mol% or less.

The form (A) will be described with reference to Fig. 1. A value of the stabilizing element content in the first region (for example, the first layer (11)) located at one end in the Y-axis direction (stacking direction) of Fig. 1 and a value of the stabilizing element content in the second region (for example, the second layer (12)) located at the other end are made close to each other (specifically, 2.0 mol% or less).

Thus, the difference in shrinkage ratio between the first layer and the second layer can be balanced with respect to the stacking direction of the sintered body to reduce warpage of the sintered body. As a result, the sintered body of the present embodiment is a sintered body with less warpage and less deformation while having gradations of the translucency and the color tone close to those of natural teeth.

In the present embodiment, only the relationship between the first region (for example, the first layer (11)) located at one end and the second region (for example, the second layer (12)) located at the other end is specified; however, when the shrinkage ratios in the regions (layers) located at these two end portions are adjusted, warpage of the sintered body can be effectively reduced. Accordingly, with regard to each layer serving as the intermediate layer disposed between the first layer (11) and the second layer (12), a zirconia layer having any composition can be stacked.

In the sintered body of the present embodiment, the difference between the stabilizing element content in the first region and the stabilizing element content in the second region is 2.0 mol% or less and is preferably 1.8 mol% or less, 1.5 mol% or less or 0.8 mol% or less. The difference between the stabilizing element content in the first region and the stabilizing element content in the second region is preferably small but may be, for example, 0 mol% or more, more than 0 mol%, 0.1 mol% or more or 0.3 mol% or more. The difference may be 0 mol% or more and 2.0 mol% or less, 0 mol% or more and 1.5 mol% or less, more than 0 mol% and 1.8 mol% or less, or more than 0 mol% and 1.5 mol% or less.

In the present embodiment, the stabilizing element content in each region (each layer) is the molar ratio of stabilizing elements on an oxide basis relative to the total of zirconia and the stabilizing elements on an oxide basis. The oxides used in the conversion of the stabilizing elements are $Y_2O_3$ for yttrium, $CaO$ for calcium, $MgO$ for magnesium, $CeO_2$ for cerium, $Pr_6O_{11}$ for praseodymium, $Nd_2O_3$ for neodymium, $Tb_4O_7$ for terbium, $Er_2O_3$ for erbium and $Yb_2O_3$ for ytterbium. For example, when yttrium and erbium are contained as stabilizing elements, the stabilizing element content (mol%) is determined from $(Y_2O_3 + Er_2O_3)/(ZrO_2 + Y_2O_3 + Er_2O_3) \times 100$.

<<Form (B)>>

In the sintered body of the present embodiment, the difference between the shrinkage ratio of the sintered body in a first region located at one end among the stacked regions and the shrinkage ratio of the sintered body in a second region located at the other end (difference in shrinkage ratio) is 0.4% or less.

The form (B) will be described with reference to Fig. 1. A value of the shrinkage ratio of the sintered body in the first region (for example, the first layer (11)) located at one end in the Y-axis direction (stacking direction) of Fig. 1 and a value of the shrinkage ratio of the sintered body in the second region (for example, the second layer (12)) located at the other end are made close to each other (specifically, 0.4% or less).

Thus, the difference in shrinkage ratio between the first layer and the second layer can be balanced with respect to the stacking direction of the sintered body to reduce warpage of the sintered body. As a result, the sintered body of the present embodiment is a sintered body with less warpage and less deformation while having gradations of the translucency and the color tone close to those of natural teeth.

In the present embodiment, only the relationship between the first region (for example, the first layer (11)) located at one end and the second region (for example, the second layer (12)) located at the other end is specified; however, when the shrinkage ratios in the regions (layers) located at these two end portions are adjusted, warpage of the sintered body can be effectively reduced. Accordingly, with regard to each layer serving as the intermediate layer disposed between the first layer (11) and the second layer (12), a zirconia layer having any composition can be stacked.

In the sintered body of the present embodiment, the difference between the shrinkage ratio of the sintered body in the first region and the shrinkage ratio of the sintered body in the second region is 0.4% or less and is preferably 0.36% or less, 0.3% or less or 0.2% or less. The difference between the shrinkage ratio of the sintered body in the first region and the shrinkage ratio of the sintered body in the second region is preferably small but may be, for example, 0% or more, more than 0%, 0.01% or more or 0.02% or more. The difference may be 0% or more and 0.4% or less, more than 0% and 0.36% or less, 0.01% or more and 0.2% or less or 0.02% or more and 0.2% or less.

<<<Method for measuring shrinkage ratio>>>

The shrinkage ratio of the first region (for example, the first layer (11)) located at one end and the shrinkage ratio of the second region (for example, the second layer (12)) located at the other end are determined as described below.

Zirconia raw material powders having compositions that are the same as those of the first layer (11) and the second layer (12) are individually placed in a die and subjected to uniaxial pressure (hereinafter, also referred to as "uniaxial press") forming and then subjected to a cold isostatic pressing (hereinafter, also referred to as "CIP") process to thereby form powder composition layers, which are samples for shrinkage ratio measurement. The powder composition layers are each calcined at 800°C or higher and lower than 1,200°C and then sintered at 1,200°C or higher and 1,600°C or lower to prepare zirconia layers. The shrinkage ratios of the zirconia layers are determined by the method described in the section of [Method for evaluating shrinkage ratio] below.

A description will be made in more detail.

The samples for shrinkage ratio measurement are each prepared under the following conditions.

[Sample for shrinkage ratio measurement]

Die diameter: Φ 25 mm
Mass of powder: 4 g
Forming pressure: Uniaxial press forming: 49 MPa + CIP process: 196 MPa
Forming step: placing powder to be evaluated in die → flattening → uniaxial press forming → CIP process

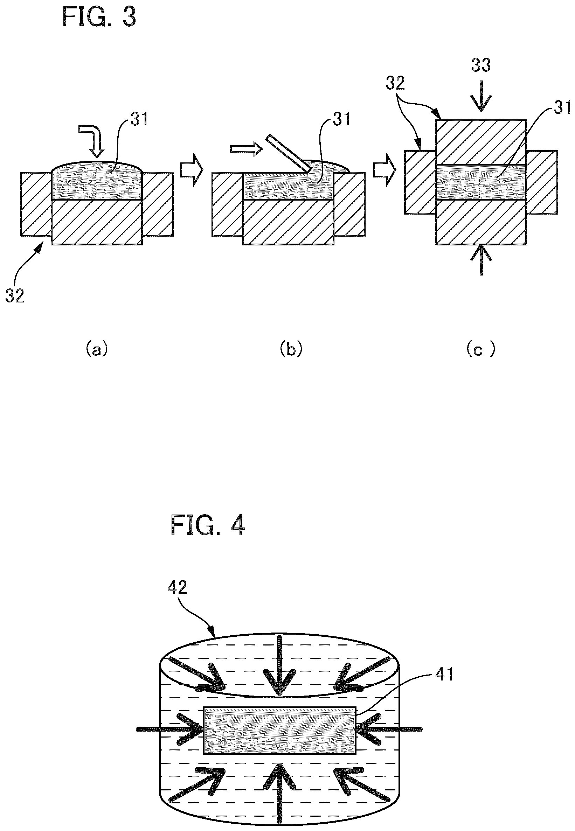

Fig. 3 includes schematic views illustrating the uniaxial press forming in the forming step in the sample preparation, and Fig. 4 is a schematic view illustrating the CIP process in the forming step.
Fig. 3 illustrates a state in which (a) a powder (31) is placed in a die (32) → (b) the powder is flattened → (c) the powder is pressed by uniaxial press forming (33).
Fig. 4 illustrates a state (CIP process) in which a powder that has been subjected to uniaxial press forming (41) is placed in a high-pressure container, the high-pressure container is filled with a solvent (42) such as water, and the powder is isostatically pressed by water pressure.
The resulting sample for shrinkage ratio measurement is calcined and then sintered under the conditions described below.

[Calcination/sintering conditions]

The calcination is performed at 800°C or higher and lower than 1,200°C, and the sintering is performed at 1,200°C or higher and 1,600°C or lower. More detailed conditions can be selected as appropriate. Preferably, in the present disclosure, the calcination is performed, and the sintering is then performed under the conditions described below.
Calcination: 15°C/hour from room temperature to 300°C, holding at 300°C for five hours, 15°C/hour from 300°C to 700°C, holding at 700°C for one hour, 50°C/hour from 700°C to 1,000°C, holding at 1,000°C for two hours, and cooling in the furnace is subsequently performed.
Sintering: 100°C/hour from room temperature to 1,500°C, holding at 1,500°C for two hours, and cooling in the furnace is subsequently performed.
For the sintered body of the sample for shrinkage ratio measurement obtained as described above, measurement of the shrinkage ratio is performed.

[Method for evaluating shrinkage ratio]

The diameter of the sintered body of the sample for shrinkage ratio measurement (hereinafter, also referred to as a "sample diameter") is measured with a vernier caliper. The sample diameter may be determined by measuring diameters of the sample for shrinkage ratio measurement with a vernier caliper at four points, and calculating the average of the measured values.
The shrinkage ratio is calculated from the following formula (1).

Shrinkage ratio (%) = (die diameter: Φ 25 mm - sample diameter)/die diameter: Φ 25 mm × 100          (1)

For example, when the sample diameter is 24 mm, the shrinkage ratio is (25 - 24)/25 × 100 = 4%.

<Composition of zirconia layer>

The sintered body of the present embodiment is composed of a zirconia layer containing stabilizing element-containing zirconia and, if a coloring element is contained, the coloring element. The zirconia layer is a layer containing zirconia as a main component, and the zirconia is stabilizing element-containing zirconia. The sintered body of the present embodiment and the zirconia layer (sintered body layer) may contain not only the stabilizing element-containing zirconia and the coloring element but also incidental impurities such as hafnia ($HfO_2$). The content of hafnia contained as an incidental impurity may be, for example, 2.0 mass% or less, although it largely varies depending on the raw material ore and the production method. In the present embodiment, the calculation of values related to the composition, such as the calculation of a content and a density, the calculation may be performed by regarding

hafnia as zirconia ($ZrO_2$).

In the sintered body of the present embodiment, the zirconia is preferably zirconia in a state where zirconia prepared by heat-treating a zirconia sol is sintered, more preferably zirconia in a state where zirconia prepared by heat-treating a zirconia sol that is obtained by hydrolysis of a zirconium compound is sintered, still more preferably zirconia in a state where zirconia prepared by heat-treating a zirconia sol that is obtained by hydrolysis of zirconium oxychloride is sintered.

The zirconia contained in the zirconia layer may be sintered zirconia, that is, zirconia crystal grains.

<<Stabilizing element>>

The stabilizing element is an element having the function of suppressing the phase transition of zirconia. The stabilizing element may be at least one of an element not having the function of coloring zirconia but having the function of suppressing the phase transition (hereinafter, also referred to as a "non-coloring-stabilizing element") and an element having the function of coloring zirconia and having the function of suppressing the phase transition (hereinafter, also referred to as a "coloring-stabilizing element"), may be the non-coloring-stabilizing element and the coloring-stabilizing element, and preferably contains at least the non-coloring-stabilizing element.

Specific stabilizing elements may be, for example, one or more selected from the group consisting of yttrium (Y), calcium (Ca), magnesium (Mg), cerium (Ce), praseodymium (Pr), neodymium (Nd), terbium (Tb), erbium (Er) and ytterbium (Yb).

The non-coloring-stabilizing element may be, for example, one or more selected from the group consisting of yttrium, calcium, magnesium and cerium and is preferably at least one of yttrium and cerium, more preferably yttrium.

The coloring-stabilizing element may be, for example, one or more selected from the group consisting of praseodymium, neodymium, terbium, erbium and ytterbium and is preferably at least one of terbium and erbium.

A preferred stabilizing element is one or more selected from the group consisting of yttrium, terbium and erbium; yttrium, terbium and erbium; yttrium and at least one of terbium and erbium; erbium and yttrium; or yttrium.

The stabilizing element is in a state of being contained in zirconia and in a state of being dissolved in zirconia. Preferably, the sintered body of the present embodiment does not contain an undissolved stabilizing element, that is, does not contain a stabilizing element that is not dissolved in zirconia. In the present embodiment, the expression "does not contain an undissolved stabilizing element" means that an XRD peak derived from a stabilizing element is not confirmed in XRD measurement and the analysis of an XRD pattern described later, and the sintered body is allowed to contain an undissolved stabilizing element to the extent that an XRD peak derived from a stabilizing element is not confirmed.

In the sintered body of the present embodiment, as for the stabilizing element content in the stabilizing element-containing zirconia contained in each layer (corresponding to each region), for example, the lower limit value may be 1.5 mol% or more, 2.5 mol% or more, 3.0 mol% or more, 3.5 mol% or more or 4.0 mol% or more, and the upper limit value may be 7.0 mol% or less, 6.0 mol% or less or 5.0 mol% or less. These upper limit values and lower limit values may be set in any combination. Accordingly, the stabilizing element content in the stabilizing element-containing zirconia contained in each layer (corresponding to each region) of the present embodiment may be 1.5 mol% or more and 7.0 mol% or less, 2.5 mol% or more and 6.0 mol% or less or 3.0 mol% or more and 6.0 mol% or less.

For example, when the sintered body in Fig. 1 is used as an example, as for each of the stabilizing element contents in the stabilizing element-containing zirconia contained in the first layer (corresponding to the first region) (11) and the second layer (corresponding to the second region) (12), for example, the lower limit value is preferably 1.5 mol% or more or 2.5 mol% or more, and the upper limit value is preferably 6.0 mol% or less or 5.5 mol% or less. These upper limit values and lower limit values may be set in any combination. Accordingly, the stabilizing element contents in the stabilizing element-containing zirconia contained in the first layer (corresponding to the first region) (11) and the second layer (corresponding to the second region) (12) of the present embodiment may each be 1.5 mol% or more and 6.0 mol% or less or 2.5 mol% or more and 5.5 mol% or less. As for the stabilizing element content in the stabilizing element-containing zirconia contained in the third layer (corresponding to the third region) (13) in the sintered body in Fig. 1, for example, the lower limit value is preferably 2.5 mol% or more or 3.0 mol% or more, and the upper limit value is preferably 7.0 mol% or less or 6.0 mol% or less. These upper limit values and lower limit values may be set in any combination. Accordingly, the stabilizing element content in the stabilizing element-containing zirconia contained in the third layer (corresponding to the third region) (13) of the present embodiment may be 2.5 mol% or more and 7.0 mol% or less or 3.0 mol% or more and 6.0 mol% or less.

In Fig. 1, the difference in stabilizing element content between adjacent layers is preferably 0.01 mol% or more, 0.2 mol% or more, 0.3 mol% or more, 0.5 mol% or more, 0.7 mol% or more, 1.0 mol% or more or 1.2 mol% or more. As the difference in stabilizing element content increases, the difference in translucency between zirconia layers tends to increase, while the warpage may increase in some cases. When the difference in stabilizing element content between adjacent layers is less than 2.5 mol%, 2.0 mol% or less or 1.7 mol% or less, the change in translucency of the sintered body is likely to be a change in translucency equivalent to that of natural teeth. The difference in stabilizing element content between adjacent layers may be, for example, 0.01 mol% or more and less than 2.5 mol%, 0.2 mol% or more and 2.0 mol% or less, 0.3 mol% or more and 1.7 mol% or less, 0.5 mol% or more and 1.7 mol% or less or 1.2 mol% or more and 1.7 mol% or less.

When the sintered body in Fig. 2 is used as an example, as for each of the stabilizing element contents in the stabilizing element-containing zirconia contained in the first layer (corresponding to the first region) (21) and the second layer (corresponding to the second region) (22), for example, the lower limit value is preferably 1.5 mol% or more or 2.5 mol% or more, and the upper limit value is preferably 7.0 mol% or less or 6.0 mol% or less. These upper limit values and lower limit values may be set in any combination. Accordingly, the stabilizing element contents in the stabilizing element-containing zirconia contained in the first layer (corresponding to the first region) (21) and the second layer (corresponding to the second region) (22) of the present embodiment are each preferably 1.5 mol% or more and 7.0 mol% or less or 2.5 mol% or more and 6.0 mol% or less. As for each of the stabilizing element contents in the stabilizing element-containing zirconia contained in the third layer (corresponding to the third region) (23) and the fourth layer (corresponding to the third region) (24) serving as intermediate layers in the sintered body in Fig. 2, for example, the lower limit value is preferably 2.0 mol% or more or 2.5 mol% or more, and the upper limit value is preferably 6.0 mol% or less or 5.5 mol% or less. These upper limit values and lower limit values may be set in any combination. Accordingly, each of the stabilizing element contents in the stabilizing element-containing zirconia contained in the third layer (corresponding to the third region) (23) and the fourth layer (corresponding to the third region) (24) of the present embodiment is preferably 2.0 mol% or more and 6.0 mol% or less or 2.5 mol% or more and 5.5 mol% or less.

In Fig. 2, the difference in stabilizing element content between adjacent layers is preferably 0.01 mol% or more, 0.2 mol% or more, 0.3 mol% or more, 0.5 mol% or more, 0.7 mol% or more, 1.0 mol% or more or 1.2 mol% or more. As the difference in stabilizing element content increases, the difference in translucency between zirconia layers tends to increase, while the warpage may increase in some cases. When the difference in stabilizing element content between adjacent layers is 2.5 mol% or less, less than 2.5 mol%, 2.0 mol% or less or 1.7 mol% or less, the change in translucency of the sintered body is likely to be a change in translucency equivalent to that of natural teeth. The difference in stabilizing element content between adjacent layers may be, for example, 0.01 mol% or more and 2.5 mol% or less, 0.01 mol% or more and less than 2.5 mol%, 0.2 mol% or more and 2.0 mol% or less, 0.3 mol% or more and 1.7 mol% or less, 0.5 mol% or more and 1.7 mol% or less or 1.2 mol% or more and 1.7 mol% or less.

The stabilizing element content in a sintered body is determined from a formula below and varies depending on the thickness of each zirconia layer.

```
Stabilizing element content in sintered body

    = (layer thickness of first layer/height of sintered

body) × stabilizing element content in first layer

        + (layer thickness of second layer/height of

sintered body) × stabilizing element content in second layer

            + ···

            + (layer thickness of nth layer/height of

sintered body) × stabilizing element content in nth layer
```

In the present embodiment, the stabilizing element content is the molar ratio of stabilizing elements relative to the total of zirconia and the stabilizing elements as described above. In the calculation of the stabilizing element content, the content of each stabilizing element may be determined by the conversion of the stabilizing element into an oxide, as described above.

<<Coloring element>>

The coloring element in the present embodiment is an element having the function of coloring zirconia. Specific coloring elements may be, for example, at least any of transition metal elements and lanthanoid rare-earth elements, are preferably one or more selected from the group consisting of iron (Fe), cobalt (Co), nickel (Ni), manganese (Mn), titanium (Ti), praseodymium (Pr), neodymium (Nd), europium (Eu), gadolinium (Gd), terbium (Tb), erbium (Er) and ytterbium (Yb), more preferably one or more selected from the group consisting of iron, cobalt, manganese, titanium, praseodymium, gadolinium, terbium and erbium, still more preferably one or more selected from the group consisting of iron, cobalt, titanium, terbium and erbium. The coloring element contained in the sintered body of the present embodiment may be at least any of coloring elements contained in the form of an oxide (hereinafter, also referred to as "oxide coloring elements") and coloring elements contained in the form of a solid solution in zirconia, such as coloring-stabilizing elements. The oxide coloring elements are preferably one or more selected from the group consisting of iron, cobalt, nickel, manganese and titanium, more preferably one or more selected from the group consisting of iron, cobalt and titanium. The sintered body of the present embodiment may contain two or more coloring elements and may contain, for example, two or more and five or less coloring elements, or three or more and four or less coloring elements. The sintered body of the present embodiment preferably contains at least a coloring-stabilizing element, more preferably contains at least one of terbium and erbium, and still more preferably contains at least terbium and erbium.

The types and contents of the coloring elements contained in each zirconia layer are appropriately selected in consideration of, for example, the shrinkage ratio of each layer.

The coloring element content in the sintered body of the present embodiment is represented as a mass ratio of coloring elements on an oxide basis relative to the mass of the sintered body of the present embodiment, the lower limit value is preferably more than 0 mass%, 0.01 mass% or more, 0.03 mass% or more or 0.04 mass% or more, and the upper limit value is preferably 2.0 mass% or less, 1.2 mass% or less, 0.8 mass% or less or 0.3 mass% or less. These upper limit values and lower limit values may be set in any combination. Accordingly, the coloring element content in the sintered body of the present embodiment, which is the mass ratio of coloring elements on an oxide basis relative to the mass of the sintered body of the present embodiment, may be, for example, more than 0 mass% and 2.0 mass% or less, 0.01 mass% or more and 1.2 mass% or less, 0.03 mass% or more and 0.8 mass% or less or 0.04 mass% or more and 0.3 mass% or less. For example, when yttrium (non-coloring-stabilizing element) and erbium (coloring-stabilizing element) are contained as stabilizing elements, and alumina and cobalt (oxide coloring element) are contained, the coloring element content (mass%) is determined from $(Co_3O_4 + Er_2O_3)/(ZrO_2 + Y_2O_3 + Er_2O_3 + Co_3O_4 + Al_2O_3) \times 100$. The oxides used in the conversion of the coloring elements are $Pr_6O_{11}$ for praseodymium, $Nd_2O_3$ for neodymium, $Tb_4O_7$ for terbium, $Er_2O_3$ for erbium, $Yb_2O_3$ for ytterbium, $Fe_2O_3$ for iron, $Co_3O_4$ for cobalt, NiO for nickel, $Mn_3O_4$ for manganese and $TiO_2$ for titanium.

The coloring element content in the sintered body layer of the present embodiment is represented as a mass ratio of coloring elements on an oxide basis relative to the mass of the sintered body of the present embodiment, the lower limit value is preferably more than 0 mass%, 0.01 mass% or more, 0.03 mass% or more or 0.04 mass% or more, and the upper limit value is preferably 2.0 mass% or less, 1.2 mass% or less, 0.8 mass% or less or 0.3 mass% or less. These upper limit values and lower limit values may be set in any combination. Accordingly, the coloring element content, which is the mass ratio of coloring elements on an oxide basis relative to the mass of the sintered body of the present embodiment, may be more than 0 mass% and 2.0 mass% or less, 0.01 mass% or more and 1.2 mass% or less, 0.03 mass% or more and 0.8 mass% or less or 0.04 mass% or more and 0.3 mass% or less.

For example, when the sintered body in Fig. 1 is used as an example, as for each of the coloring element contents of coloring element-containing zirconia contained in the first layer (corresponding to the first region) (11) and the second layer (corresponding to the second region) (12), for example, the lower limit value may be 0.01 mass% or more, 0.05 mass% or more or 0.1 mass% or more, and the upper limit value may be 2.0 mass% or less or 1.2 mass% or less. These upper limit values and lower limit values may be set in any combination. Accordingly, the coloring element contents in the coloring element-containing zirconia contained in the first layer (corresponding to the first region) (11) and the second layer (corresponding to the second region) (12) of the present embodiment may each be 0.01 mass% or more and 2.0 mass% or less or 0.05 mass% or more and 1.2 mass% or less. As for the coloring element content in coloring element-containing zirconia contained in the third layer (corresponding to the third region) (13) in the sintered body in Fig. 1, for example, the lower limit value is preferably 0.001 mass% or more or 0.1 mass% or more, and the upper limit value is more preferably 2.0 mass% or less or 1.2 mass% or less. These upper limit values and lower limit values may be set in any combination. Accordingly, the coloring element content in the coloring element-containing zirconia contained in the third layer (corresponding to the third region) (13) of the present embodiment may be 0.001 mass% or more and 2.0 mass% or less or 0.1 mass% or more and 1.2 mass% or less.

In Fig. 1, the difference in coloring element content between adjacent layers is preferably 0.002 mass% or more, 0.005 mass% or more, 0.01 mass% or more, 0.015 mass% or more or 0.02 mass% or more. As the difference in coloring element content increases, the difference in color tone between zirconia layers tends to increase, while the warpage may increase in some cases. When the difference in coloring element content between adjacent layers is 1 mass% or less, 0.8 mass% or less or 0.5 mass% or less, the change in color tone of the sintered body is likely to be a change in color tone equivalent to that of natural teeth. The difference in coloring element content between adjacent layers is preferably 0.002 mass% or more and 1 mass% or less, 0.005 mass% or more and 0.8 mass% or less, 0.01 mass% or more and 0.5 mass% or less, 0.015 mass% or more and 0.5 mass% or less or 0.02 mass% or more and 0.5 mass% or less.

When the sintered body in Fig. 2 is used as an example, as for each of coloring element contents in the coloring element-containing zirconia contained in the first layer (corresponding to the first region) (21) and the second layer (corresponding to the second region) (22), for example, the lower limit value is preferably 0.01 mass% or more, 0.05 mass% or more or 0.1 mass% or more, and the upper limit value is preferably 2.0 mass% or less or 1.2 mass% or less. These upper limit values and lower limit values may be set in any combination. Accordingly, the coloring element contents in the coloring element-containing zirconia contained in the first layer (corresponding to the first region) (21) and the second layer (corresponding to the second region) (22) of the present embodiment may be 0.01 mass% or more and 2.0 mass% or less or 0.05 mass% or more and 1.2 mass% or less. As for each of the coloring element contents in coloring element-containing zirconia contained in the third layer (corresponding to the third region) (23) and the fourth layer (corresponding to the third region) (24) serving as intermediate layers in the sintered body in Fig. 2, the lower limit value is preferably 0.001 mass% or more or 0.1 mass% or more, and the upper limit value is preferably 2.0 mass% or less or 1.2 mass% or less. These upper limit values and lower limit values may be set in any combination. Accordingly, each of the coloring element contents in the coloring element-containing zirconia contained in the third layer (corresponding to the third region) (23) and the fourth layer (corresponding to the third region) (24) of the present embodiment may be 0.001 mass% or more and 2.0 mass% or less or 0.1 mass% or more and 1.2 mass% or less.

In Fig. 2, the difference in coloring element content between adjacent layers is preferably 0.001 mass% or more, 0.002 mass% or more, 0.005 mass% or more, 0.01 mass% or more, 0.05 mass% or more or 0.1 mass% or more. As the difference in coloring element content increases, the difference in color tone between zirconia layers tends to increase, while the warpage may increase in some cases. When the difference in coloring element content between adjacent layers is 1 mass% or less, 0.8 mass% or less, or 0.5 mass% or less, the change in color tone of the sintered body is likely to be a change in color tone equivalent to that of natural teeth. The difference in coloring element content between adjacent layers is preferably 0.002 mass% or more and 1 mass% or less, 0.005 mass% or more and 0.8 mass% or less, 0.01 mass% or more and 0.5 mass% or less, 0.015 mass% or more and 0.5 mass% or less or 0.02 mass% or more and 0.5 mass% or less.

The sintered body of the present embodiment may contain alumina, and at least one zirconia layer preferably contains alumina. The alumina content of the sintered body of the present embodiment, which is the ratio of the mass of alumina relative to the mass of the sintered body, is 0 mass% or more and may be 0 mass% or more and 0.15 mass% or less, 0 mass% or more and 0.10 mass% or less or 0 mass% or more and 0.07 mass% or less. When alumina is contained, for example, the lower limit value of the alumina content exceeds 0 mass% and is preferably 0.005 mass% or more or 0.01 mass% or more, and the upper limit value of the alumina content may be 0.15 mass% or less, 0.10 mass% or less, or 0.07 mass% or less. These upper limit values and lower limit values may be set in any combination. Accordingly, the alumina content may be, for example, more than 0 mass% and 0.15 mass% or less, 0.005 mass% or more and 0.10 mass% or less or 0.01 mass% or more and 0.07 mass% or less.

The alumina content in each zirconia layer may be, for example, the same range as that described above. The alumina content in each zirconia layer may affect the thermal shrinkage behavior at the calcination stage. The zirconia layers may have any alumina content, and the alumina contents in the zirconia layers may be different but are preferably equal to each other. When the alumina contents in zirconia layers are different from each other, for example, the lower limit value of the difference in alumina content between adjacent zirconia layers exceeds 0 mass% and may be 0.005 mass% or more, and the upper limit value of the difference in alumina content between adjacent zirconia layers may be 0.15 mass% or less, 0.1 mass% or less, 0.03 mass% or less or 0.01 mass% or less. These upper limit values and lower limit values may be set in any combination. Accordingly, the difference in alumina content between adjacent zirconia layers may be, for example, more than 0 mass% and 0.15 mass% or less, more than 0 mass% and 0.1 mass% or less, more than 0 mass% and 0.03 mass% or less or 0.005 mass% or more and 0.01 mass% or less. For example, in a case of a zirconia layer containing alumina ($Al_2O_3$) and composed of zirconia containing yttrium ($Y_2O_3$) as a non-coloring-stabilizing element and erbium ($Er_2O_3$) as a coloring-stabilizing element, the alumina content can be determined as $\{Al_2O_3 / (ZrO_2 + Y_2O_3 + Er_2O_3 + Al_2O_3)\} \times 100$ (mass%).

Preferably, the sintered body of the present embodiment does not substantially contain silica ($SiO_2$), and the silica content is more preferably less than or equal to the measurement limit.

The sintered body of the present embodiment preferably includes at least a zirconia layer containing zirconia whose crystal phase is at least one of a tetragonal phase (T phase) and a cubic phase (C phase), more preferably includes at least a zirconia layer containing zirconia that includes a tetragonal phase as a main phase, and still more preferably includes a zirconia layer containing zirconia that includes a tetragonal phase as a main phase and a zirconia layer containing zirconia that includes a cubic phase as a main phase. The term "main phase" in the present embodiment means, among crystal phases of zirconia, a crystal phase having the highest proportion of presence (proportion of the integrated intensity of a peak). The proportion of presence can be determined from an XRD pattern of the surface of the sintered body.

The XRD pattern of the surface of the sintered body can be measured, for example, under the following conditions.

Radiation source: CuKα radiation (λ = 1.541862 Å)

Measurement mode: continuous scan
Scan speed: 4°/minute
Measurement range: $2\theta = 26°$ to $33°$
Acceleration voltage-current: 40 mA·40 kV
Divergence height limiting slit: 10 mm
Divergence/incident slit: 1°
Light-receiving slit: open
Detector: semiconductor detector (D/teX Ultra)
Filter: Ni filter
Goniometer radius: 185 mm

The obtained XRD pattern is subjected to smoothing treatment and background subtraction treatment and then subjected to profile-fitting using a split pseudo-Voigt function to determine the proportions of the tetragonal phase and the cubic phase (proportions of the integrated intensity of peaks), and a crystal phase having the highest proportion is determined as the main phase. The measurement and fitting of the XRD pattern can be performed using a general-purpose powder X-ray diffractometer (for example, Ultima IV, manufactured by RIGAKU Corporation) and analysis programs attached to an X-ray diffractometer (for example, Integrated X-ray powder diffraction software PDXL Ver. 2.2, manufactured by RIGAKU Corporation).

<Properties of sintered body and each zirconia layer (each sintered body layer) constituting sintered body>

The sintered body (100) in Fig. 1 is illustrated such that the first layer, the third layer and the second layer have substantially the same thickness. However, in the sintered body of the present embodiment, the thicknesses of the layers (hereinafter, also referred to as "layer thicknesses") may be different from each other, or a layer thickness of any of the first layer to the third layer may be large. For example, as for the layer thickness of each of the first layer to the third layer, the lower limit value of the layer thickness may be 1 mm or more, 2 mm or more or 3 mm or more, and the upper limit value of the layer thickness may be 20 mm or less, 15 mm or less, or 10 mm or less. These upper limit values and lower limit values may be set in any combination. Accordingly, the layer thickness of each of the first layer to the third layer may be, for example, 1 mm or more and 20 mm or less, 2 mm or more and 15 mm or less or 3 mm or more and 10 mm or less.

More specifically, in the sintered body in Fig. 1, the layer thickness of the first layer is preferably 0.5 mm or more and 10 mm or less, the layer thickness of the second layer is preferably 0.5 mm or more and 10 mm or less, and the layer thickness of the third layer is preferably 1 mm or more and 20 mm or less.

In the sintered body in Fig. 2, the layer thickness of the first layer is preferably 0.5 mm or more and 10 mm or less, and the layer thickness of the second layer is preferably 0.5 mm or more and 10 mm or less. The layer thickness of each layer in the intermediate layer is preferably 1 mm or more and 10 mm or less.

The sintered body of the present embodiment may have any shape appropriate for the purpose, for example, at least one selected from the group consisting of spherical, elliptical, disk, cylindrical, cubic, rectangular parallelepiped and polyhedral shapes; shapes suitable for dental materials such as dental prosthetic materials, e.g., crowns, bridges, onlays and inlays; and any other shape appropriate for the intended use. In the present embodiment, the spherical shape covers a sphere-like shape other than a sphere, such as a substantially spherical shape, and the polyhedral shape may cover, besides a polyhedron, a polyhedron-like shape such as a substantially polyhedral shape.

The sintered body of the present embodiment may have any dimensions and may have, for example, a length of 10 mm or more and 120 mm or less, a width of 12 mm or more and 120 mm or less and a height of 6 mm or more and 40 mm or less. The thickness of the sintered body of the present embodiment in the stacking direction, that is, the height of the sintered body is not limited but may be, for example, 4 mm or more and 40 mm or less, or 5 mm or more and 30 mm or less.

<<Warpage and amount of deformation of sintered body>>

In the sintered body of the present embodiment, warpage measured using a thickness gauge conforming to JIS B 7524:2008 (hereinafter, also simply referred to as a "gauge") (hereinafter, also simply referred to as "warpage") is preferably 1.0 mm or less. A sintered body having a structure including three or more zirconia layers has a shape warped in the stacking direction (or in a direction opposite to the stacking direction) due to sintering. When such a sintered body is disposed on a horizontal plate, a gap is formed between the sintered body and the horizontal plate.

The warpage in the present embodiment is a value measured using a gauge. The warpage of the sintered body of the present embodiment is preferably 0.3 mm or less, 0.2 mm or less, 0.1 mm or less or 0.05 mm or less. Preferably, the sintered body has no warpage (has a warpage of 0 mm); however, the sintered body of the present embodiment is allowed to have warpage to the extent that the warpage cannot be measured with a gauge (warpage of 0 mm or more). The warpage of the sintered body of the present embodiment may be, for example, more than 0 mm or 0.01 mm or more. The warpage is preferably 0.06 mm or less, 0.05 mm or less or less than or equal to the measurement limit (less than 0.03 mm).

The warpage can be measured by the maximum value of the thickness of a gauge that can be inserted into the gap formed in a state where the sintered body is disposed such that a convex portion of the sintered body contacts the horizontal plate. The warpage of the sintered body of the present embodiment may be 0 mm or more and 0.3 mm or less, 0 mm or more and 0.05 mm or less, 0 mm or more and less than 0.03 mm, or more than 0 mm and less than 0.03 mm.

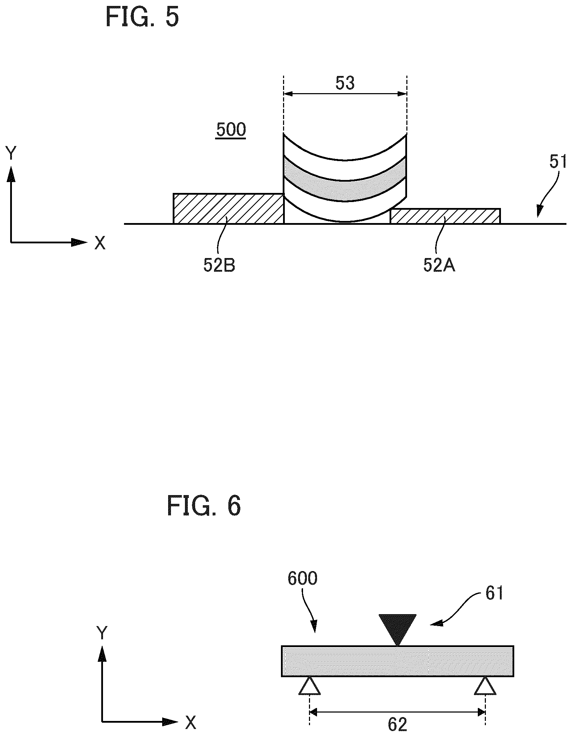

Fig. 5 is a schematic view illustrating a method for measuring the warpage. The figure illustrates a section of a sintered body (500), which is a disk-shaped sample, the sintered body being warped in the stacking direction (Y-axis direction). In Fig. 5, for the sake of description, the sintered body (500) is illustrated with the warpage being exaggerated. As illustrated in Fig. 5, in measuring the warpage, the sintered body (500) having a concavo-convex shape is disposed such that a convex portion thereof contacts a horizontal plate (51). This forms a gap between a surface at which the sintered body (500) and the horizontal plate (51) contact each other (hereinafter, also referred to as a "bottom surface") and the horizontal plate (51). A gauge is inserted into the gap, and the maximum value of the thickness of a gauge that can be inserted can be used to measure the warpage. In Fig. 5, a gauge (52A) is located below the bottom surface of the sintered body (500), illustrating a state in which the gauge (52A) can be inserted into the gap. In contrast, a gauge (52B) is not located below the bottom surface of the sintered body (500), illustrating a state in which the gauge (52B) cannot be inserted into the gap. The gauges (52A) and (52B) in Fig. 5 are gauges that differ from each other in thickness by one level (for example, 0.01 mm), and the warpage of the sintered body (500) corresponds to the thickness of the gauge (52A). Note that, to simplify the description, Fig. 5 is illustrated as a drawing in which both the gauges (52A) and (52B) are inserted; however, the warpage may be measured by sequentially inserting a gauge into the gap in order from the thinnest gauge (for example, after the measurement is performed using the gauge (52A), the gauge (52A) is removed, and the measurement is then performed using the gauge (52B) with a larger thickness).

In the sintered body of the present embodiment, warpage with respect to a dimension of the sintered body (hereinafter, also referred to as an "amount of deformation") is preferably 1.0 or less, 0.5 or less, 0.2 or less or 0.15 or less. The amount of deformation may be, for example 0 or more, 0.01 or more or 0.05 or more. The amount of deformation may be 0 or more and 1.0 or less, 0 or more and 0.15 or less, 0.01 or more and 1.0 or less or 0.05 or more and 0.15 or less.

The amount of deformation can be determined from the following formula (2).

$$\cdot \text{ Amount of deformation} = (\text{warpage: mm})/(\text{dimension of sintered body: mm}) \times 100 \tag{2}$$

The dimension of the sintered body is a size of the sintered body in a direction perpendicular to the direction of the warpage. Since the sintered body (500) in Fig. 5 is warped in the stacking direction (Y-axis direction), the dimension of the sintered body (500) is a size (53) of the sintered body in the horizontal direction (X-axis direction) perpendicular to the stacking direction. The dimension can be measured by a publicly known method using a vernier caliper, a micrometer or the like. For example in a case of a disk or cylindrical layered body, the dimension of the sintered body is the diameter of the sintered body. In such a case of a disk or cylindrical layered body, the dimension of the sintered body can be measured with a vernier caliper. For example, the diameter at the upper end and the diameter at the lower end are each measured at four points, the averages of the diameters at the upper end and the lower end are determined, and the average of the determined values may be defined as the dimension of the layered body.

In the present embodiment, the warpage and the amount of deformation are preferably values measured using, as a measurement sample, a disk-shaped sample, more preferably values measured using, as a measurement sample, a disk-shaped sample with a diameter of 5 mm or more and 120 mm or less.

For example, when a sintered body has a diameter of 105 mm and a warpage of 0.2 mm, the amount of deformation is:

$$0.2/105 \times 100 = 0.19$$

<<Density of sintered body>>

The sintered body of the present embodiment may have, for example, a lower limit value of a density of 5.7 g/cm$^3$ or more or 5.9 g/cm$^3$ or more, and an upper limit value of the density of 6.3 g/cm$^3$ or less or 6.1g/cm$^3$ or less, the density being measured by a method according to JIS R 1634. These upper limit values and lower limit values may be set in any combination. Accordingly, the density of the sintered body of the present embodiment is, for example, 5.7 g/cm$^3$ or more and 6.3g/cm$^3$ or less and preferably 5.9 g/cm$^3$ or more and 6.1 g/cm$^3$ or less. The density in this range corresponds to 99% or more in terms of relative density and is a density at which a so-called dense sintered body with practical strength is provided.

<<Color tone of sintered body or sintered body layer>>

The color tone of the sintered body of the present embodiment or each zirconia layer (each sintered body layer) can be evaluated by, for example a color tone represented by the L*a*b* color system. Regarding the color tone of the sintered body of the present embodiment or each zirconia layer (each sintered body layer), for example, the lower limit value of the lightness L* represented by the L*a*b* color system may be 50 or more or 55 or more, the upper limit value of the lightness L* may be 80 or less or 70 or less, the lower limit value of the hue a* may be -5 or more or -3 or more, the upper limit value of the hue a* may be 15 or less or 10 or less, the lower limit value of the hue b* may be 0 or more or 3 or more and the upper limit value of the hue b* may be 45 or less or 35 or less. These upper limit values and lower limit values may be set in any combination. Accordingly, the color tone of the sintered body of the present embodiment or each zirconia layer (each sintered body layer) may have, for example, a lightness L* represented by the L*a*b* color system of 50 or more and 80 or less or 55 or more and 70 or less, a hue a* of -5 or more and 15 or less or -3 or more and 10 or less, and a hue b* of 0 or more and 45 or less or 3 or more and 35 or less. When the color tone is within this range, the sintered body exhibits a color tone similar to that of natural teeth.

Since the sintered body of the present embodiment has a change in the color tone, the chroma C* is preferably different between layers adjacent to each other in the stacking direction. The chroma C* is an index indicating vividness and is determined from the hues a* and b* represented by the L*a*b* color system by means of $C^* = \{(a^*)^2 + (b^*)^2\}^{0.5}$. The lower limit value of the absolute value ($\Delta C^*$) of the difference in chroma C* between adjacent layers may be, for example, 0.1 or more, 0.3 or more, 1.0 or more or 1.5 or more, and the upper limit value of the absolute value ($\Delta C^*$) may be, for example, 20.0 or less, 15.0 or less, 10.0 or less or 5.0 or less. These upper limit values and lower limit values may be set in any combination. Accordingly, in the sintered body of the present embodiment, the absolute value ($\Delta C^*$) of the difference in chroma C* between adjacent layers may be, for example, 0.1 or more and 20.0 or less, 0.3 or more and 15.0 or less, 1.0 or more and 10.0 or less or 1.5 or more and 5.0 or less. When $\Delta C^*$ is within this range, the sintered body can be visually recognized as a layered body having a gradation of vividness close to that of natural teeth.

Similarly, the lower limit value of the absolute value ($\Delta L^*$) of the difference in lightness L* between adjacent layers may be, for example, 1.0 or more or 1.5 or more, and the upper limit value of the absolute value ($\Delta L^*$) may be, for example, 30.0 or less or 15.0 or less. These upper limit values and lower limit values may be set in any combination. Accordingly, in the sintered body of the present embodiment, the absolute value ($\Delta L^*$) of the difference in lightness L* between adjacent layers may be, for example, 1.0 or more and 30.0 or less, or 1.5 or more and 15.0 or less.

The color tone (L*, a* and b*) and C* can be determined with a colorimeter (for example, ZE6000, manufactured by NIPPON DENSHOKU INDUSTRIES Co., Ltd.) equipped with an illumination/light-receiving optical system conforming to the geometric conditions c of JIS Z 8722. As for specific conditions for measuring the color tone and C*, for example, the following conditions can be employed in a measurement method in which a zero calibration box is disposed on a measurement sample (so-called black background measurement). The color tone of the sintered body of the present embodiment may be measured using a measurement sample prepared by cutting out an arbitrarily selected portion of the sintered body in the horizontal direction and processing the cut portion to a sample thickness of 2.8 ± 0.1 mm.

Light source: illuminant D65
Viewing angle: 2°
Measurement mode: SCI

<<Transmittance of sintered body or sintered body layer>>

The sintered body of the present embodiment preferably includes at least a zirconia layer having translucency. Furthermore, the sintered body of the present embodiment preferably has at least a zirconia layer having a lower limit value of a total light transmittance, of light from the CIE standard illuminant D65 through a sample having a thickness of 1.0 ± 0.1 mm (hereinafter, also simply referred to as a "total light transmittance"), of 15% or more, 20% or more, 30% or more, 32% or more or 35% or more and an upper limit value of the total light transmittance of 50% or less, 45% or less or 42% or less. These upper limit values and lower limit values may be set in any combination. Accordingly, the sintered body of the present embodiment preferably has a zirconia layer having a total light transmittance of, for example, 15% or more and 50% or less, 20% or more and 45% or less or 32% or more and 42% or less. Sintered bodies of the present embodiment absorb light with different wavelengths depending on their coloration. Therefore, as an index of translucency, the total light transmittance of light including different wavelengths, such as the CIE standard illuminant D65, is suitable.

In the sintered body of the present embodiment, the lower limit value of the difference in total light transmittance of zirconia layers stacked adjacent to each other is preferably 1% or more or 1.5% or more, and the upper limit value of the difference in total light transmittance is preferably 10% or less or 5% or less. These upper limit values and lower limit values may be set in any combination. Accordingly, in the sintered body of the present embodiment, the difference in total light transmittance of zirconia layers stacked adjacent to each other is preferably, for example, 1% or more and 10% or less or 1.5% or more and 5% or less.

The total light transmittance is measured by a method according to JIS K 7361 and can be determined as a value of a total transmittance of a diffuse transmittance and a linear transmittance of incident light which is the CIE standard illuminant D65. A sample is prepared by cutting out an arbitrarily selected portion of a sintered body in the horizontal direction, and processing the cut portion to have a thickness of $1.0 \pm 0.1$ mm and a surface roughness (Ra) of 0.02 $\mu$m or less. The sample is irradiated with light of the CIE standard illuminant D65 using a typical turbidimeter (haze meter; for example, NDH4000, manufactured by NIPPON DENSHOKU INDUSTRIES Co., Ltd.), transmitted light is collected with an integrating sphere to measure the transmittance (diffuse transmittance and linear transmittance) of light through the sample, and this transmittance is determined as the total light transmittance.

<<Three-point bending strength of sintered body layer>>

Three-point bending strength of each zirconia layer (each sintered body layer) in the sintered body of the present embodiment is preferably 500 MPa or more, 550 MPa or more or 600 MPa or more, as measured by a method according to JIS R 1601. The three-point bending strength may be, for example, less than 1,200 MPa, or 1,160 MPa or less. A preferred three-point bending strength is 500 MPa or more and less than 1,200 MPa, 550 MPa or more and 1,160 MPa or less or 600 MPa or more and 1,160 MPa or less.

Fig. 6 is a schematic view illustrating a state of measurement of three-point bending strength of a zirconia layer (sintered body layer) (600). In Fig. 6, the Y-axis direction indicates the stacking direction, and the X-axis direction indicates the horizontal direction. A measurement sample to be subjected to the measurement of three-point bending strength is a rectangular parallelepiped sintered body prepared so that the thickness extends in the stacking direction, and the width and the length extend in the horizontal direction. As illustrated in Fig. 6, the three-point bending strength is measured by applying a load (61) in a direction perpendicular the length of the measurement sample (600). The measurement sample is disposed such that the load (61) is applied to the middle of a support span (62). The measurement of the three-point bending strength is performed ten times at a support span of 30 mm and a cross head speed of 0.5 mm/min using, as a measurement sample, a columnar sintered body having a width of 4 mm and a thickness of 3 mm, and the average of the measurements is defined as the three-point bending strength of the zirconia layer (sintered body layer) according to the present embodiment.

Next, a calcine body will be described below. The calcined body will be described by focusing on the differences from the above-described sintered body.

(Calcined body)

A calcined body according to the present embodiment is

a calcined body of a zirconia composition,
in which the zirconia composition contains (iii) a stabilizing element-containing zirconia composition having a necking structure, or (iv) a zirconia composition containing stabilizing element-containing zirconia having a necking structure and a coloring element.

The calcined body has three or more regions stacked in a layered manner, two adjacent regions among the regions differ from each other in at least one of stabilizing element content and coloring element content, and a difference between the stabilizing element content in a first region located at one end among the stacked regions and the stabilizing element content in a second region located at the other end is 2.0 mol% or less.

A calcined body of another embodiment according to the present embodiment is

a calcined body comprising a zirconia composition,
in which the zirconia composition contains (iii) a stabilizing element-containing zirconia composition having a necking structure or (iv) a zirconia composition containing stabilizing element-containing zirconia having a necking structure and a coloring element.

The calcined body has three or more regions stacked in a layered manner, two adjacent regions among the regions differ from each other in at least one of stabilizing element content and coloring element content, and a difference between a shrinkage ratio of the calcined body in a first region located at one end among the stacked regions and a shrinkage ratio of the calcined body in a second region located at the other end (difference in shrinkage ratio) is 0.4% or less.

The calcined body is a layered body composed of a microstructure having a necking structure, so-called calcined particles. The calcined body is processed as necessary, can be provided as a precursor of a sintered body, and is also referred to as a pre-sintered body, a soft sintered body or a semi-sintered body.

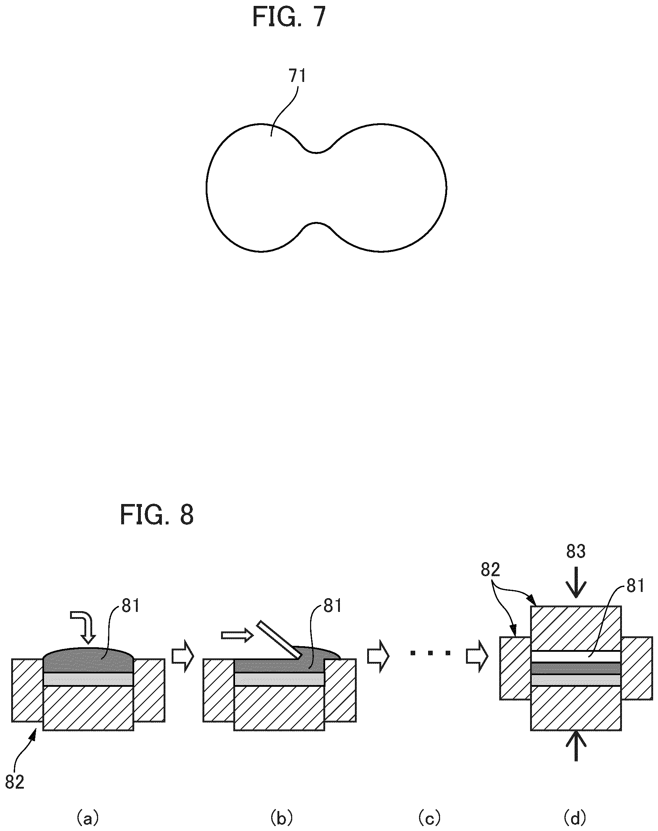

The necking structure is a structure of zirconia heat-treated at a temperature lower than the sintering temperature and is a structure in which zirconia particles chemically coalesce with each other. As illustrated in Fig. 7, in zirconia (71) contained in a zirconia composition layer included in a calcined body, part of the particle shape of zirconia in a powder composition can be confirmed. In the present embodiment, the microstructure having a necking structure is a structure composed of zirconia at the sintering initial stage. This is different from the sintered microstructure, that is, the structure composed of zirconia crystal grains at the sintering later stage.

Accordingly, the calcined body of the present embodiment can also be regarded as a layered body including three or more zirconia composition layers composed of zirconia particles having a necking structure of stabilizing element-containing zirconia, or if a coloring element is contained, zirconia composition layers containing the coloring element and zirconia composed of zirconia particles having a necking structure of stabilizing element-containing zirconia.

The calcined body has, instead of having zirconia layers, zirconia composition layers composed of stabilizing element-containing zirconia having a necking structure, or if a coloring element is contained, zirconia composition layers containing the coloring element and stabilizing element-containing zirconia having a necking structure (hereinafter, these zirconia composition layers are also collectively simply referred to as "zirconia composition layers" or "composition layers").

The calcined body has a structure equivalent to the multilayer structure illustrated in Fig. 1 or Fig. 2. In the calcined body, the stabilizing element and the coloring element may be contained in the form of a solid solution in zirconia or in the form of an oxide or a precursor thereof.

Note that, in this description, the zirconia composition layers are also referred to as calcined body layers.

<Features of multilayer structure>

Preferred embodiments of the calcined body according to the present disclosure include a calcined body described in a form (C) below and a calcined body described in a form (D) below.

<<Form (C)>>

In the calcined body of the present embodiment, the difference between the stabilizing element content in a first region located at one end among the stacked regions and the stabilizing element content in a second region located at the other end is 2.0 mol% or less.

The form (C) will be described with reference to Fig. 1. A value of the stabilizing element content in the first region (for example, the first layer (11)) located at one end in the Y-axis direction (stacking direction) of Fig. 1 and a value of the stabilizing element content in the second region (for example, the second layer (12)) located at the other end are made close to each other (specifically, 2.0 mol% or less).

Thus, the difference in shrinkage ratio between the first layer and the second layer can be balanced with respect to the stacking direction Y of the calcined body to reduce warpage of the calcined body. As a result, the calcined body of the present embodiment is a calcined body with less warpage and less deformation. Such a calcined body can effectively provide a sintered body with less warpage and less deformation, having gradations of the translucency and the color tone visually close to those of natural teeth.

In the present embodiment, only the relationship between the first region (for example, the first layer (11)) located at one end and the second region (for example, the second layer (12)) located at the other end is specified; however, when the shrinkage ratios in the regions (layers) located at these two end portions are adjusted, warpage of the calcined body can be effectively reduced. Accordingly, with regard to each layer serving as the intermediate layer disposed between the first layer (11) and the second layer (12), a zirconia composition layer having any composition can be stacked.

In the calcined body of the present embodiment, the difference between the stabilizing element content in the first region and the stabilizing element content in the second region is 2.0 mol% or less and is preferably 1.8 mol% or less, more preferably 1.5 mol% or less, still more preferably 0.8 mol% or less. The difference between the stabilizing element content in the first region and the stabilizing element content in the second region is preferably small but may be, for example, 0 mol% or more, more than 0 mol%, 0.1 mol% or more or 0.3 mol% or more. The difference between the stabilizing element content in the first region and the stabilizing element content in the second region may be, for example, 0 mol% or more and 2.0 mol% or less, more than 0 mol% and 1.8 mol% or less, 0.1 mol% or more and 1.5 mol% or less, or 0.3 mol% or more and 0.8 mol% or less.

<<Form (D)>>

In the calcined body of the present embodiment, the difference between the shrinkage ratio of the calcined body in the first region located at one end among the stacked regions and the shrinkage ratio of the calcined body in the second region located at the other end (difference in shrinkage ratio) is 0.4% or less.

The form (D) will be described with reference to Fig. 1. A value of the shrinkage ratio of the calcined body in the first region (for example, the first layer (11)) located at one end in the Y-axis direction (stacking direction) of Fig. 1 and a value of the shrinkage ratio of the calcined body in the second region (for example, the second layer (12)) located at the other end are made close to each other (specifically, 0.4% or less).

Thus, the difference in shrinkage ratio between the first layer and the second layer can be balanced with respect to the stacking direction Y of the calcined body to reduce warpage of the calcined body. As a result, the calcined body of the present embodiment is a calcined body with less warpage and less deformation. Such a calcined body can effectively provide a sintered body with less warpage and less deformation, having gradations of the translucency and the color tone visually close to those of natural teeth.

In the present disclosure, only the relationship between the first region (for example, the first layer (11)) located at one end and the second region (for example, the second layer (12)) located at the other end is specified; however, when the shrinkage ratios in the regions (layers) located at these two end portions are adjusted, warpage of the calcined body can be effectively reduced. Accordingly, with regard to each layer serving as the intermediate layer disposed between the first layer (11) and the second layer (12), a zirconia composition layer having any composition can be stacked.

In the calcined body of the present embodiment, the difference between the shrinkage ratio of the calcined body in the first region and the shrinkage ratio of the calcined body in the second region is preferably 0.4% or less, 0.36% or less, 0.3% or less or 0.2% or less. The difference between the shrinkage ratio of the calcined body in the first region and the shrinkage ratio of the calcined body in the second region is preferably small but may be, for example, 0% or more, more than 0%, 0.01% or more or 0.02% or more. The difference between the shrinkage ratio of the calcined body in the first region and the shrinkage ratio of the calcined body in the second region may be 0% or more and 0.4% or less, more than 0% and 0.36% or less, 0.01% or more and 0.3% or less or 0.02% or more and 0.2% or less.

<<<Method for measuring shrinkage ratio>>>

The shrinkage ratio of the first region (for example, the first layer (11)) located at one end and the shrinkage ratio of the second region (for example, the second layer (12)) located at the other end are determined as described below.

Zirconia raw material powders having compositions that are the same as those of the first layer (11) and the second layer (12) are individually placed in a die and subjected to uniaxial press forming and then subjected to a CIP process to thereby form powder composition layers, which are samples for shrinkage ratio measurement. The powder composition layers are calcined at 800°C or higher and lower than 1,200°C to obtain zirconia composition layers. The shrinkage ratios of the zirconia composition layers are determined by the method described in [Method for evaluating shrinkage ratio] described in the section of <<Form (B)>> of (Sintered body) above.

In determining the shrinkage ratio of a calcined body, the method for preparing a sample for shrinkage ratio measurement and calcination conditions are as described above.

<Composition of zirconia composition layer>

The zirconia contained in the calcined body is preferably in a state where zirconia prepared by heat-treating a zirconia sol is heat-treated at a temperature lower than the sintering temperature, more preferably in a state where zirconia prepared by heat-treating a zirconia sol that is obtained by hydrolysis of a zirconium compound is heat-treated at a temperature lower than the sintering temperature, still more preferably in a state where zirconia prepared by heat-treating a zirconia sol that is obtained by hydrolysis of zirconium oxychloride is heat-treated at a temperature lower than the sintering temperature.

The stabilizing element content in stabilizing element-containing zirconia contained in a first composition layer (corresponding to the first region), the stabilizing element content in stabilizing element-containing zirconia contained in a second composition layer (corresponding to the second region) and the stabilizing element content in stabilizing element-containing zirconia contained in a third composition layer or a composition layer serving as an intermediate layer (corresponding to the third region) may be the same as the above-described stabilizing element contents in the first layer, the second layer and the third layer (intermediate layer), respectively.

Each composition layer in the calcined body may have any stabilizing element content, but the stabilizing element content may be the same as that in the above-described sintered body layer of the present embodiment.

The calcined body more preferably includes at least a zirconia composition layer containing zirconia that includes a cubic phase or a tetragonal phase as a main phase.

<Properties of calcined body and each zirconia composition layer (each calcined body layer) constituting calcined body>

The warpage of the calcined body is preferably 1.0 mm or less, 0.5 mm or less, 0.3 mm or less, 0.2 mm or less, 0.1 mm or less or 0.05 mm or less. Preferably, the calcined body has no warpage (has a warpage of 0 mm); however, the calcined body is allowed to have warpage to the extent that the warpage cannot be measured with a gauge (warpage of 0 mm or more). The warpage of the calcined body may be, for example, more than 0 mm, or 0.01 mm or more. The warpage is preferably 0.06 mm or less, 0.05 mm or less or less than or equal to the measurement limit (less than 0.03 mm). The warpage of the calcined body may be 0 mm or more and 0.3 mm or less, 0 mm or more and 0.05 mm or less, 0 mm or more and less than 0.03 mm, or more than 0 mm and less than 0.03 mm.

The amount of deformation of the calcined body is preferably 1.0 or less, 0.5 or less, 0.2 or less or 0.15 or less. The amount of deformation may be, for example, 0 or more, 0.01 or more or 0.05 or more. The amount of deformation may be 0 or more and 1.0 or less, 0 or more and 0.15 or less, 0.01 or more and 1.0 or less or 0.05 or more and 0.15 or less.

The calcined body may have a lower limit value of the density of, for example, 2.4 $g/cm^3$ or more or 3.1 $g/cm^3$ or more and an upper limit value of the density of, for example, 3.7 $g/cm^3$ or less or 3.5 $g/cm^3$ or less. These upper limit values and lower limit values may be set in any combination. Accordingly, the density of the calcined body is 2.4 $g/cm^3$ or more and 3.7 $g/cm^3$ or less and is preferably 3.1 $g/cm^3$ or more and 3.5 $g/cm^3$ or less, for example. The density in this range corresponds to 40% to 60% in terms of relative density. The calcined body only needs to be a layered body having strength suitable for processing such as CAD/CAM processing.

The density of the calcined body is determined from the mass determined by the mass measurement and the volume determined by the dimensional measurement.

The color tone of the zirconia composition layers included in the calcined body may be different from that of the sintered body (sintered body layers) obtained by sintering the calcined body.

The calcined body and each composition layer (each calcined body layer) are opaque and have a total light transmittance of 0%; however, in consideration of measurement errors, the total light transmittance may be, for example, 0% or more and 0.2% or less.

The calcined body and each composition layer (each calcined body layer) only need to have strength to the extent that defects are unlikely to occur during processing such as CAD/CAM or cutting and may have, for example, a Vickers hardness of 25 HV or more and 150 HV (= $kgf/mm^2$) or less or 30 HV or more and 130 HV or less.

The Vickers hardness can be measured with a typical Vickers tester (for example, Q30A, manufactured by Qness) equipped with a square pyramidal diamond indenter. In the measurement, the indenter is statically pressed onto the surface of a measurement sample, and the diagonal length of an indentation mark formed on the surface of the measurement sample is visually measured. The Vickers hardness can be calculated from the measured diagonal length using the following formula.

$$Hv = F/\{d^2/2\sin(\alpha/2)\}$$

In the above formula, Hv is the Vickers hardness (HV), F is the measurement load (1 kgf), d is the diagonal length of an indentation mark (mm), and $\alpha$ is the angle between opposite faces of the indenter (136°).

The Vickers hardness is measured, for example, under the following conditions.

Measurement sample: a disk shape with a thickness of 2.0 ± 0.5 mm
Measurement load: 1 kgf

As pretreatment prior to the measurement, the measurement sample is prepared by cutting out an arbitrarily selected portion of the calcined body in the horizontal direction, and the measurement surface of the measurement sample is polished with #800 waterproof abrasive paper to remove asperities exceeding 0.1 mm.

The layered body of the present embodiment can be used for applications of publicly known zirconia, such as decorative members, structural members and optical materials. When the layered body is a sintered body, the layered body can be suitably used as a dental material of a denture, such as a crown or a bridge, to provide a dental material including the sintered body of the present embodiment. When the layered body is a calcined body, the layered body can be suitably used as, for example, a precursor of a dental material of a denture, such as a crown or a bridge, to provide a dental prosthetic material such as a blank, a disk, a block or a mill blank or a precursor thereof. The layered body of the sintered body or calcined body of the present embodiment can be used as a dental material.

Next, methods for producing layered bodies (specifically, a sintered body, a calcined body, and a green body) of the present embodiment will be described below.

(Methods for producing sintered body and calcined body)

A method for producing a sintered body of the present embodiment is as follows.

The method for producing a sintered body comprises a step of sintering, at 1,200°C or higher and 1,600°C or lower, a green body in which three or more powder composition layers composed of a zirconia raw material powder containing stabilizing element-containing zirconia and, if a coloring element is contained, the coloring element are stacked.

Another method for producing a sintered body of the present embodiment is as follows.

The method for producing a sintered body comprises a step of calcining, at 800°C or higher and lower than 1,200°C, a green body in which three or more powder composition layers composed of a zirconia raw material powder containing stabilizing element-containing zirconia and, if a coloring element is contained, the coloring element are stacked to obtain a calcined body; and a step of sintering the calcined body at 1,200°C or higher and 1,600°C or lower.

A method for producing a calcined body of the present embodiment is as follows.

The method for producing a calcined body comprises a step of calcining, at 800°C or higher and lower than 1,200°C, a green body in which three or more powder composition layers composed of a zirconia raw material powder containing stabilizing element-containing zirconia and, if a coloring element is contained, the coloring element are stacked.

A method for producing a green body prepared to produce the sintered body or the calcined body is as follows.

The method for producing a green body includes a step of stacking three or more powder composition layers composed of a zirconia raw material powder containing stabilizing element-containing zirconia and, if a coloring element is contained, the coloring element to prepare a green body.

Note that, in this description, the powder composition layers are also referred to as green body layers.

The green body used in the production methods of the present embodiment will be described below by focusing on the main differences from the above-described sintered body.

The green body used in the production methods of the present embodiment is formed by stacking three or more powder composition layers composed of a raw material powder of stabilizing element-containing zirconia, or, if a coloring element is contained, powder composition layers composed of a raw material powder of zirconia containing stabilizing element-containing zirconia and the coloring element.

The green body is a layered body formed by stacking powder composition layers, and the green body can be used as a precursor of a calcined body or a sintered body.

The green body has, instead of having zirconia layers, powder composition layers composed of a powder composition of stabilizing element-containing zirconia or, if a coloring element is contained, powder composition layers composed of a powder composition containing stabilizing element-containing zirconia and the coloring element (hereinafter, these powder composition layers are also collectively simply referred to as "powder layers").

The green body has a structure equivalent to the multilayer structure illustrated in Fig. 1 or Fig. 2.

Accordingly, the green body can also be regarded as a layered body including three or more layers containing a zirconia powder that contains a stabilizing element. In the green body, the stabilizing element and the coloring element may be contained in the form of a solid solution in zirconia or in the form of an oxide or a precursor thereof. The precursor may be, for example, one or more selected from the group consisting of a sulfide, a chloride, a nitrate, a sulfate, a hydroxide and an oxyhydroxide or one or more selected from the group consisting of a chloride, a hydroxide and an oxyhydroxide. The coloring element preferably includes at least an oxide.

The zirconia contained in the powder layer is preferably zirconia prepared by heat-treating a zirconia sol, more preferably zirconia prepared by heat-treating a zirconia sol that is obtained by hydrolysis of a zirconium compound, still more preferably zirconia prepared by heat-treating a zirconia sol that is obtained by hydrolysis of zirconium oxychloride.

The zirconia contained in the powder layers is preferably a zirconia powder. The zirconia powder preferably has a lower limit value of the average particle size of 0.3 $\mu$m or more or 0.4 $\mu$m or more, and preferably has an upper limit value of the average particle size of 0.7 $\mu$m or less or 0.5 $\mu$m or less. These upper limit values and lower limit values may be set in any combination. Accordingly, the average particle size of the zirconia powder is preferably, for example, 0.3 $\mu$m or more and 0.7 $\mu$m or less, or 0.4 $\mu$m or more and 0.5 $\mu$m or less.

The zirconia powder preferably has a BET specific surface area of 7.5 m$^2$/g or more and 15 m$^2$/g or less. If the BET specific area is less than the above range, the sintering rate is excessively slow. On the other hand, if the BET specific area exceeds the above range, the sintering rate is excessively fast. In either case, densification is unlikely to occur in pressureless sintering, in particular, atmospheric sintering. Since densification tends to be promoted even in the case of applying sintering with high temperature increase rate, the lower limit value of the BET specific surface area is preferably 8 m$^2$/g or more, 9 m$^2$/g or more or 9.5 m$^2$/g or more, and the upper limit value of the BET specific surface area is preferably 15 m$^2$/g or less, 13 m$^2$/g or less or 11 m$^2$/g or less. These upper limit values and lower limit values may be set in any combination. Accordingly, the BET specific surface area of the zirconia powder is preferably, for example, 8 m$^2$/g or more and 15 m$^2$/g or less, 9 m$^2$/g or more and 13 m$^2$/g or less or 9.5 m$^2$/g or more and 11 m$^2$/g or less.

In the present embodiment, the BET specific surface area refers to a BET specific surface area measured in accordance with JIS R 1626 and may be measured by a five-point BET method by a carrier gas method using nitrogen as an adsorption gas. The BET specific surface area can be measured, for example, under the following specific conditions.

[Conditions for BET specific surface area measurement]

Adsorption medium: $N_2$
Adsorption temperature: -196°C
Pretreatment conditions: degassing treatment in air at 250°C for one hour or more

The BET specific surface area can be measured with a typical device (for example, TriStar II 3020, manufactured by Shimadzu Corporation).

The coloring element contained in the powder layers is preferably in at least one of the state of being mixed with a zirconia powder and the state of being contained in the form of a solid solution in zirconia. Alternatively, a coloring element powder and a zirconia powder may be in a mixed state.

The green body may contain a binder. When the binder is contained, the shape retention of the green body is improved. The binder contained in the green body may be a publicly known binder used in forming ceramics and is preferably an organic binder. The organic binder is one or more selected from the group consisting of polyvinyl alcohol, polyvinyl butyrate, wax and an acrylic resin, preferably one or more of polyvinyl alcohol and an acrylic resin, more preferably an acrylic resin. In the present embodiment, the acrylic resin is a polymer containing at least one of an acrylate and a methacrylate. Specifically, the acrylic resin may be, for example, one or more selected from the group consisting of polyacrylic acid, polymethacrylic acid, an acrylic acid copolymer and a methacrylic acid copolymer and a derivative thereof. Specifically, the acrylic resin binder may be, for example, an acrylic resin used for ceramic powders and one or more selected from the group consisting of AS-1100, AS-1800 and AS-2000 (all product names, manufactured by Toagosei Co., Ltd.).

The stabilizing element content in stabilizing element-containing zirconia contained in a first powder layer, the stabilizing element content in stabilizing element-containing zirconia contained in a second powder layer and the stabilizing element content in stabilizing element-containing zirconia contained in a third powder layer may be the same as the above-described stabilizing element contents in the first layer, the second layer and the third layer (intermediate layer), respectively.

Each powder layer in the green body may have any stabilizing element content and any coloring element content, but the stabilizing element content and the coloring element content may be the same as those of the above-described sintered body of the present embodiment.

When each powder layer contains a binder, from the viewpoint of reducing defects during forming, the lower limit value of the binder content in the powder layer is preferably 1.5 mass% or more, 1.5 mass% or more, 2.0 mass% or more or 2.5 mass% or more, and the upper limit value thereof is preferably 8.0 mass% or less, 6.0 mass% or less or 5.5 mass% or less. These upper limit values and lower limit values may be set in any combination. Accordingly, the binder content in each powder layer is preferably, for example, 1.5 mass% or more and 8.0 mass% or less, 2.0 mass% or more and 6.0 mass% or less or 2.5 mass% or more and 5.5 mass% or less.

The binder content is the ratio of the mass of the binder to the mass calculated by subtracting of the mass of the binder from the mass of the powder composition in the powder layer ({binder/(powder composition - binder)} $\times$ 100). In producing a powder composition, a total mass of components (for example, a stabilizing element on an oxide basis, zirconia and alumina) of the powder composition other than the binder is determined, the ratio of the mass of a target binder to the total mass is then determined, and the powder composition may be produced.

In view of operability, the powder composition included in the powder layer is preferably a powder in which a zirconia powder, if a coloring element is contained, the coloring element and, if a binder is contained, the binder are granulated (hereinafter, also referred to as a "granulated powder"), more preferably a granulated powder granulated in the form of granule by spray drying or the like (hereinafter, also referred to as a "powder granules").

The granulated powder may have any particle size, but in terms of average aggregate size (hereinafter, also referred to as an "average granule size"), the lower limit value may be, for example, 1 μm or more or 5 μm or more, and the upper limit value may be, for example, 150 μm or less, 100 μm or less, 50 μm or less or 30 μm or less. These upper limit values and lower limit values may be set in any combination. Accordingly, the particle size of the granulated powder may be, in terms of average aggregate size, for example, 1 μm or more and 150 μm or less, 1 μm or more and 100 μm or less, 5 μm or more and 50 μm or less or 5 μm or more and 30 μm or less. In another embodiment, the particle size of the granulated powder may be, for example 20 μm or more and 50 μm or less.

In the present embodiment, the average aggregate size is a size corresponding to a cumulative volume of 50% in the volume particle size distribution measurement. The volume particle size distribution includes values which can be measured with a general-purpose apparatus (for example MT3100II, manufactured by MicrotracBEL Corp.) and which are volume particle sizes approximated as spheres.

As pretreatment prior to the measurement, the granulated powder may be sieved through a sieve with an opening of 125 μm, and the measurement may be performed for the granulated powder that has passed through the sieve.

The green body preferably includes at least a powder layer containing zirconia that includes a cubic phase or a tetragonal phase as a main phase.

The warpage of the green body is preferably 1.0 mm or less, 0.3 mm or less, 0.2 mm or less, 0.1 mm or less or 0.05 mm or less. Preferably, the green body has no warpage (has a warpage of 0 mm); however, the green body is allowed to have warpage to the extent that the warpage cannot be measured with a gauge (warpage of 0 mm or more). The warpage of the green body may be, for example, more than 0 mm, or 0.01 mm or more. The warpage is preferably 0.06 mm or less, 0.05 mm or less or less than or equal to the measurement limit (less than 0.03 mm). The warpage of the green body may be 0 mm or more and 0.06 mm or less, 0 mm or more and 0.05 mm or less, 0 mm or more and less than 0.03 mm, or more than 0 mm and less than 0.03 mm.

The amount of deformation of the green body is preferably 1.0 or less, 0.5 or less, 0.2 or less or 0.15 or less. The amount of deformation may be, for example, 0 or more, 0.01 or more or 0.05 or more. The amount of deformation may be 0 or more and 1.0 or less, 0 or more and 0.15 or less, 0.01 or more and 1.0 or less or 0.05 or more and 0.2 or less.

The green body may have a lower limit value of the density of, for example, 2.4 g/cm$^3$ or more or 3.1 g/cm$^3$ or more and an upper limit value of the density of, for example, 3.7 g/cm$^3$ or less or 3.5 g/cm$^3$ or less. These upper limit values and lower limit values may be set in any combination. Accordingly, the density of the green body may be, for example, 2.4 g/cm$^3$ or more and 3.7 g/cm$^3$ or less, or 3.1 g/cm$^3$ or more and 3.5 g/cm$^3$ or less. The density in this range corresponds to 40% to 60% in terms of relative density. Note that the density of the green body can be substantially the same as the density of the calcined body in some cases.

The density of the green body is determined from the mass determined by the mass measurement and the volume determined by the dimensional measurement.

The color tone of the powder composition layers (green body layers) of zirconia included in the green body may be different from that of the sintered body (sintered body layers) obtained by sintering the green body, or there may be no change in the color tone.

The green body and each powder layer are opaque and have a total light transmittance of 0%; however, in consideration of measurement errors, the total light transmittance may be, for example, 0% or more and 0.2% or less.

The green body only needs to have strength to the extent that cracking or chipping does not occur when provided for calcination or sintering.

The green body is obtained by stacking powder compositions and forming the stacked powder compositions. Each of the powder compositions is obtained by mixing a zirconia powder and, if a binder is contained, the binder in any desired ratio by a publicly known method. The forming is preferably pressure forming. For example, a powder composition having a composition corresponding to the lowermost layer is placed in a forming die to prepare a lowermost layer. Subsequently, a powder composition having a composition corresponding to the composition of a layer adjacent to the lowermost layer is placed on the lowermost layer. To obtain a green body having a structure in which three or more powder layers are stacked, a similar operation is repeated to stack a necessary powder composition. After a powder composition having a composition corresponding to the composition of the uppermost layer is placed, uniaxial pressure forming is performed at any pressure to prepare a preliminary green body, and this preliminary green body is subjected to a CIP process to obtain the green body. In stacking, there is no need to apply vibrations that form a mixed layer between layers, such as vibrations using a vibrator. In addition, the uniaxial pressure forming is preferably performed after the powder composition having a composition corresponding to the uppermost layer is placed, and preferably, pressurization is not performed before the powder composition having the composition corresponding to the uppermost layer is placed.

The forming pressure in uniaxial pressure forming is preferably 15 MPa or more and 200 MPa or less, more preferably 18 MPa or more and 100 MPa or less. As the forming pressure in uniaxial pressure forming increases, the warpage of the green body tends to be reduced. The pressure in the CIP process may be a forming pressure of 98 MPa or more and 392 MPa or less.

When the green body is treated at a temperature lower than the sintering temperature, the green body becomes a calcined body. As the calcination method and calcination conditions, a publicly known method can be employed.

As for the holding temperature during calcination (hereinafter, also referred to as a "calcination temperature"), the lower limit value may be 800°C or higher, 900°C or higher or 950°C or higher, and the upper limit value may be lower than 1,200°C, 1,150°C or lower or 1,100°C or lower. These upper limit values and lower limit values may be set in any combination. Accordingly, the calcination temperature is, for example, 800°C or higher and lower than 1,200°C, preferably 900°C or higher and 1,150°C or lower, more preferably 950°C or higher and 1,100°C or lower.

The holding time at the calcination temperature (hereinafter, also referred to as a "calcination time") may be appropriately determined in accordance with, for example, the size of the green body to be calcined and characteristics of the calcination furnace; however, the lower limit value is preferably 0.5 hours or more, more preferably 0.5 hours or more, and the upper limit value is preferably 5 hours or less, more preferably 3 hours or less. These upper limit values and lower limit values may be set in any combination. Accordingly, the calcination time is, for example, 0.5 hours or more and 5 hours or less or 0.5 hours or more and 3 hours or less.

The temperature may be increased while the temperature to be increased, the rate of temperature increase at that time and the holding time at the increased temperature are divided into multiple stages.

The calcination may be performed, for example, under the conditions in which the temperature is increased from room temperature to 300°C at a rate of 15°C/hour, held at 300°C for five hours, increased from 300°C to 700°C at a rate of 15°C/hour, held at 700°C for one hour, increased from 700°C to 1,000°C at a rate of 50°C/hour and held at 1,000°C for two hours.

The atmosphere in the calcination step (hereinafter, also referred to as a "calcination atmosphere") is preferably an atmosphere other than a reducing atmosphere, more preferably at least one of an oxygen atmosphere or an air atmosphere, still more preferably an air atmosphere.

In the production method of the present embodiment, one of the green body and the calcined body (hereinafter, these are also collectively referred to as a "green body or the like") is treated at 1,200°C or higher and 1,600°C or lower. Thus, the green body or the like becomes a sintered body. Prior to sintering, the green body or the like may be processed into any shape.

As the sintering method and sintering conditions, a publicly known method can be employed. The sintering method may be at least one selected from the group consisting of pressureless sintering, a HIP process, SPS and vacuum sintering. The sintering method is preferably pressureless sintering, more preferably pressureless sintering in an air atmosphere because these methods are widely used as industrial sintering methods. The sintering method is preferably only pressureless sintering, and more preferably, pressure sintering after pressureless sintering is not performed. Thus, the sintered body can be produced as a pressureless sintered body. In the present embodiment, pressureless sintering is a method of sintering an object to be sintered by simple heating without applying an external force to the object at the time of sintering.

As for the holding temperature during sintering (hereinafter, also referred to as a "sintering temperature"), the lower limit value is 1,200°C or higher, and preferably 1,300°C or higher, 1,400°C or higher, 1,430°C or higher, or 1,480°C or higher, and the upper limit value is 1650°C or lower, and preferably 1,580°C or lower, 1,560°C or lower, 1,560°C or lower or 1,560°C or lower. These upper limit values and lower limit values may be set in any combination. Accordingly, the sintering temperature is, for example, 1,200°C or higher and 1,650°C or lower, 1,300°C or higher and 1,580°C or lower, 1,400°C or higher and 1,560°C or lower, 1,430°C or higher and 1,560°C or lower or 1,480°C or higher and 1,560°C or lower. In another embodiment, the sintering temperature is 1,450°C or higher and 1,650°C or lower, preferably 1,500°C or higher and 1,650°C or lower, more preferably 1,550°C or higher and 1,650°C or lower.

As for the temperature increase rate to the sintering temperature, the lower limit value may be 50°C/hour or more and is 100°C/hour or more or 150°C/hour or more, and the upper limit value is 800°C/hour or less or 700°C/hour or less. These upper limit values and lower limit values may be set in any combination. Accordingly, the temperature increase rate to the sintering temperature is, for example, 50°C/hour or more and 800°C/hour or less, 100°C/hour or more and 800°C/hour or less, 150°C/hour or more and 800°C/hour or less or 150°C/hour or more and 700°C/hour or less.

The holding time at the sintering temperature (hereinafter, also referred to as a "sintering time") varies depending on the sintering temperature, the size of the green body or the like and characteristics of the sintering furnace; however, preferably, the lower limit value is 1 hour or more, and the upper limit value is 5 hours or less, 3 hours or less, or 2 hours or less. These upper limit values and lower limit values may be set in any combination. Accordingly, the sintering time is, for example, 1 hour or more and 5 hours or less, more preferably 1 hour or more and 3 hours or less, still more preferably 1 hour or more and 2 hours or less.

The sintering may be performed, for example, under the conditions in which the temperature is increased from room temperature to 1,500°C at a rate of 100°C/hour and held at 1,500°C for two hours.

The atmosphere in the sintering (hereinafter, also referred to as a "sintering atmosphere") is preferably an atmosphere other than a reducing atmosphere, more preferably at least one of an oxygen atmosphere and an air atmosphere, still more preferably an air atmosphere. For example, the air atmosphere is mainly composed of nitrogen and oxygen and has an oxygen concentration of about 18% to 23% by volume.

Preferred sintering conditions in the sintering step include pressureless sintering in an air atmosphere.

EXAMPLES

The present disclosure will be described in more detail below with reference to examples. It should be noted that the present disclosure is not limited to these examples.

(BET specific surface area)

The BET specific surface area was measured by a five-point BET method in accordance with JIS R 1626 using an automated specific surface area measuring device (device name: TriStar II 3020, manufactured by Shimadzu Corporation). Measurement conditions are as follows.

Adsorption medium: $N_2$
Adsorption temperature: -196°C
Pretreatment conditions: degassing treatment in an air atmosphere at 250°C for one hour or more

(Average granule size)

The average granule size was measured by particle size distribution measurement by a laser diffraction/scattering method using a Microtrac particle size distribution analyzer (apparatus name: MT3100II, manufactured by MicrotracBEL Corp.). Measurement conditions are as follows.

Light source: semiconductor laser (wavelength: 780 nm)
Voltage: 3 mW
Refractive index of zirconia: 2.17
Calculation mode: MT3000

As pretreatment prior to the measurement, a granulated powder was sieved through a sieve with an opening of 125 $\mu$m, and the measurement was performed for the granulated powder that had passed through the sieve.

(Warpage and amount of deformation)

A disk-shaped green body, a calcined body or a sintered body was used as a measurement sample, and the amount of deformation was determined from the following formula (3).

$$\text{Amount of deformation} = (\text{warpage: mm})/(\text{dimension: mm}) \times 100 \qquad (3)$$

The method for determining the amount of deformation will be described in more detail.
The conditions for preparing a layered body are as follows.

[Layered body]

Die diameter: $\Phi$ 110 mm
Mass of powder: 470 g (total mass of stacked powder)
Forming pressure: Uniaxial press forming: 49 MPa + CIP process: 196 MPa
Forming step: placing raw material powder that forms first layer in die → flattening → placing raw material powder that forms second layer in die → flattening → (after that, repeating) → uniaxial press forming → CIP process

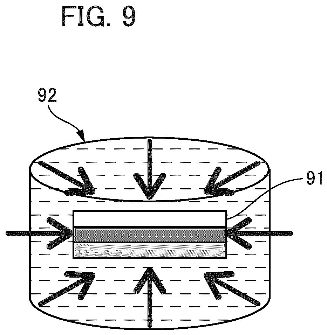

Fig. 8 includes schematic views illustrating the uniaxial press forming in the forming step in the preparation of the layered body, and Fig. 9 is a schematic view illustrating the CIP process in the forming step.
Fig. 8 illustrates a state in which (a) a powder composition (81) is placed in a die (82) → (b) the powder composition is flattened → (c) (the second layer is also similarly formed, and after that, the operation is repeated), (d) the powder composition is pressed by uniaxial press forming (83).
Fig. 9 illustrates a state in which a powder that has been subjected to uniaxial press forming (layered body) (91) is placed in a high-pressure container, the high-pressure container is filled with a solvent (92), and the powder is isostatically pressed (CIP process).
Green bodies for measuring warpage and the amount of deformation were obtained through the CIP process.
One of the green bodies was subjected to calcination under the conditions below to prepare a calcined body for measuring warpage and the amount of deformation.
Another one of the green bodies was subjected to calcination and sintering under the conditions below to prepare a sintered body for measuring warpage and the amount of deformation.

[Calcination/sintering conditions]

Calcination: 15°C/hour from room temperature to 300°C, holding at 300°C for five hours, 15°C/hour from 300°C to 700°C, holding at 700°C for one hour, 50°C/hour from 700°C to 1,000°C, holding at 1,000°C for two hours, and cooling in the furnace was subsequently performed.

Sintering: 100°C/hour from room temperature to 1,500°C, holding at 1,500°C for two hours, and cooling in the furnace was subsequently performed.

For each of the layered bodies of the green body, the calcined body, and the sintered body, the warpage was measured by the measurement method illustrated in Fig. 5. The measurement sample was disposed such that a convex portion of the measurement sample contacted a horizontal plate. A gauge (product name: 75A19, manufactured by Nagai Gauge Seisakusho) was inserted into a gap formed between the horizontal plate and the bottom surface to measure the warpage. The measurement was performed by inserting a gauge disposed parallel to the horizontal plate into the gap formed between the horizontal plate and the bottom surface of the measurement sample, and measuring a gauge thickness which corresponded to the maximum thickness of the gauge that could be inserted into the gap, and the gauge thickness was defined as the warpage. The warpage was sequentially measured from a gauge thickness of 0.03 mm at intervals of 0.01 mm using a single gauge or by combining gauges.

As for the dimension of the measurement sample, the diameter at the upper end and the diameter at the lower end were each measured at four points with a vernier caliper, and the average of the diameters at the upper and lower ends was determined.

(Zirconia powder A1)

A commercially available zirconia powder Zpex Smile (manufactured by TOSOH CORPORATION) was used as a zirconia powder A1.

The zirconia powder A1 was subjected to uniaxial press forming at a pressure of 49 MPa and a CIP process at a pressure of 196 MPa to obtain a powder layer (green body layer) of the zirconia powder A1.

The obtained powder layer (green body layer) was calcined and sintered under conditions below to obtain a zirconia layer (sintered body layer).

[Calcination/sintering conditions]

Calcination: 15°C/hour from room temperature to 300°C, holding at 300°C for five hours, 15°C/hour from 300°C to 700°C, holding at 700°C for one hour, 50°C/hour from 700°C to 1,000°C, holding at 1,000°C for two hours, and cooling in the furnace was subsequently performed.

Sintering: 100°C/hour from room temperature to 1,500°C, holding at 1,500°C for two hours, and cooling in the furnace was subsequently performed.

For the zirconia layer (sintered body layer) of the zirconia powder A1, the three-point bending strength (MPa), the total light transmittance (%) and the color tone (L*, a* and b*) were measured by the following methods.

<Three-point bending strength (MPa)>

The three-point bending strength was measured by the measurement method illustrated in Fig. 6, as described above.

<Total light transmittance (%)>

The total light transmittance of a sample was measured by a method according to the method of JIS K 7361. The measurement sample was irradiated with the standard illuminant D65, and the light flux transmitted through the measurement sample was detected by an integrating sphere, thereby measuring the total light transmittance. A typical haze meter (device name: haze meter NDH4000, manufactured by NIPPON DENSHOKU INDUSTRIES Co., Ltd.) was used for the measurement.

An arbitrarily selected portion of the sintered body was cut out as the measurement sample in the horizontal direction, and both surfaces of the sample were then mirror-polished to have a sample thickness of $1.0 \pm 0.1$ mm and a surface roughness (Ra) of 0.02 $\mu$m or less.

<L*, a* and b*>

The color tone was measured with a colorimeter (device name: ZE6000, manufactured by NIPPON DENSHOKU INDUSTRIES Co., Ltd.). Measurement conditions are as described below.

As for specific conditions for measuring the color tone and C*, the following conditions were employed in a measurement method in which a zero calibration box was disposed on a measurement sample (so-called black background measurement).

Light source: illuminant D65
Viewing angle: 2°
Measurement mode: SCI

The sintered body sample was prepared by cutting out an arbitrarily selected portion of the sintered body in the horizontal direction, and subsequently mirror-polishing a measurement surface of the sample to have a sample thickness of $2.8 \pm 0.1$ mm and a surface roughness (Ra) of 0.02 $\mu$m or less.

The evaluation results of properties of the zirconia layer (sintered body layer) using the zirconia powder A1 are shown in Table 1-2.

(Zirconia powder A2)

An aqueous solution of zirconium oxychloride was hydrolyzed to prepare a hydrated zirconia sol. Yttrium chloride and erbium oxide were added to the hydrated zirconia sol such that the yttrium concentration was 5.05 mol% in terms of $Y_2O_3$, and the erbium concentration was 0.15 mol% in terms of $Er_2O_3$, and the resulting zirconia sol was then dried at 180°C. The zirconia sol after drying was fired at 1,160°C for two hours, subsequently washed with pure water, and dried in air at 110°C. $\alpha$-Alumina, iron oxide serving as an oxide coloring element and pure water were mixed with the dried zirconia sol to prepare a slurry, and the slurry was treated in a ball mill for 22 hours to obtain a slurry including a powder containing 0.05 mass% of alumina, 0.085 mass% of iron in terms of iron oxide serving as an oxide coloring element and the balance being 5.05 mol% yttrium and 0.15 mol% erbium-containing zirconia. An acrylic acid binder was added to the resulting slurry such that the mass ratio of the binder to the mass of the powder in the slurry was 3 mass%, and mixing was performed. The slurry was spray-dried in air at 180°C to obtain a zirconia powder A2.

The obtained zirconia powder had a BET specific surface area of 10.1 m$^2$/g and an average granule size of 44 $\mu$m.

(Zirconia powders A3 to A6)

Zirconia powders A3 to A6 were obtained by methods similar to that for the zirconia powder A2 except that firing was performed at 1,130°C, and yttrium chloride, erbium oxide, $\alpha$-alumina and iron oxide were used so as to achieve the compositions shown in Table 1-1.

The compositions of the zirconia powders A1 to A6 are shown in Table 1-1.

Zirconia layers (sintered body layers) using the zirconia powders A2 to A6 were prepared by methods similar to that described in the section of (Zirconia powder A1) above, and properties of the zirconia layers (sintered body layers) were evaluated. The evaluation results are shown in Table 1-2.

(Zirconia powder B1)

A commercially available zirconia powder Zpex4 (manufactured by TOSOH CORPORATION) was used as a zirconia powder B1.

(Zirconia powder C1)

A commercially available zirconia powder Zpex (manufactured by TOSOH CORPORATION) was used as a zirconia powder C1.

(Zirconia powders B2 to B11 and C2 to C4)

Zirconia powders B2 to B11 and C2 to C4 having the compositions shown in Table 1-1 were prepared by methods similar to that for the zirconia powder A2 except that the types and contents of stabilizing elements and the types and contents of coloring elements were changed from those of the zirconia powder A2, as shown in Table 1-1.

(Zirconia powders B8 to B11)

Zirconia powders B8 to B11 were prepared by methods similar to that for the zirconia powder A2 except that the firing was performed at 1,125°C, and yttrium chloride, erbium oxide, $\alpha$-alumina, iron oxide, tricobalt tetraoxide and titanium oxide were used so as to achieve the compositions shown in Table 1-1.

Also for the zirconia powders B1 to B11 and C1 to C4, sintered body layers using these powders were prepared, and properties of the sintered body layers were evaluated. The evaluation results are shown in Table 1-1. Note that ppm in Table 1-2 denotes mass ppm.

[Table 1-1]

| Powder number | Powder physical properties | | | | | | | | | | | | |
| --- | --- | --- | --- | --- | --- | --- | --- | --- | --- | --- | --- | --- | --- |
| | Stabilizing element (mol%) | | | | Coloring element (ppm) | | | | | | | | |
| | $Y_2O_3$ | $Tb_4O_7$ | $Er_2O_3$ | Y + Tb + Er | $Fe_2O_3$ | $Tb_4O_7$ | $Co_3O_4$ | $Mn_3O_4$ | $Er_2O_3$ | $TiO_2$ | $Al_2O_3$ (wt%) | BET ($m^2$/g) | Average granule size ($\mu$m) |
| A1 | 5.50 | | | 5.50 | | | | | | | 0.05 | 10.0 | 44 |
| A2 | 5.05 | | 0.15 | 5.20 | 850 | | | | 4500 | | 0.05 | 10.1 | 44 |
| A3 | 5.20 | | | 5.20 | | | | | | | 0.00 | 10.5 | 45 |
| A4 | 4.90 | | 0.13 | 5.30 | 656 | | | | 3920 | | 0.00 | 10.5 | 45 |
| A5 | 5.20 | | | 5.20 | | | | | | | 0.05 | 10.5 | 45 |
| A6 | 4.90 | | 0.13 | 5.30 | 656 | | | | 3920 | | 0.05 | 10.5 | 45 |
| B1 | 4.00 | | | 4.00 | | | | | | | 0.05 | 10.0 | 44 |
| B2 | 3.80 | | 0.10 | 3.90 | 700 | | | | 3004 | | 0.05 | 10.1 | 44 |
| B3 | 3.63 | | 0.18 | 3.81 | 1280 | | 28 | | 5403 | | 0.05 | 10.0 | 44 |
| B4 | 3.81 | 0.005 | 0.12 | 3.94 | | 300 | 20 | | 3500 | 100 | 0.05 | 10.1 | 44 |
| B5 | 3.57 | 0.012 | 0.37 | 3.95 | | 500 | 50 | | 4500 | 250 | 0.05 | 10.0 | 44 |
| B6 | 3.82 | 0.005 | 0.10 | 3.93 | | 300 | | 3 | 3000 | | 0.05 | 10.1 | 44 |
| B7 | 3.62 | 0.021 | 0.31 | 3.95 | | 1200 | | 22 | 9300 | | 0.05 | 10.0 | 44 |
| B8 | 3.84 | | 0.12 | 3.96 | 730 | | | | 3627 | 3103 | 0.05 | 10.4 | 45 |
| B9 | 3.72 | | 0.26 | 3.98 | 1412 | | 32 | | 7839 | 6161 | 0.05 | 10.5 | 45 |
| B10 | 3.84 | | 0.12 | 3.96 | 700 | | | | 3861 | | 0.05 | 10.2 | 45 |
| B11 | 3.72 | | 0.26 | 3.98 | 1280 | | 32 | | 3604 | | 0.05 | 10.3 | 45 |
| C1 | 3.00 | | | 3.00 | | | | | | | 0.05 | 13.0 | 44 |
| C2 | 2.84 | | 0.17 | 3.01 | 1600 | | 27 | | 5003 | | 0.05 | 12.9 | 44 |
| C3 | 2.96 | | 0.03 | 2.99 | 1600 | | 53 | | 1000 | | 0.05 | 13.0 | 44 |
| C4 | 3.00 | | | 3.00 | | | | | | | 0.00 | 14.0 | 44 |

[Table 1-2]

| Powder number | Properties of sintered body layer | | | | |
| | Three-point bending strength | Total light transmittance | Color tone | | |
| | (MPa) | (%) | L* | a* | b* |
| A1 | 651 | 49 | 82.1 | -0.1 | 1.6 |
| A2 | 632 | 42 | 56.7 | 0.7 | 13.2 |
| A3 | 820 | 48 | 82.4 | -0.3 | 1.8 |
| A4 | 860 | 42 | 56.9 | 1.5 | 13.1 |
| A5 | 834 | 48 | 82.4 | -0.3 | 1.8 |
| A6 | 864 | 42 | 56.9 | 1.5 | 13.1 |
| B1 | 1097 | 45 | 74.4 | 1.0 | -0.6 |
| B2 | 1105 | 39 | 64.8 | -0.6 | 13.8 |
| B3 | 1112 | 28 | 56.9 | 2.5 | 18.9 |
| B4 | 1078 | 39 | 65.4 | -0.1 | 9.1 |
| B5 | 1069 | 28 | 55.5 | 3.1 | 16.4 |
| B6 | 1072 | 38 | 64.5 | -0.5 | 15.2 |
| B7 | 1105 | 26 | 54.6 | 2.9 | 15.9 |
| B8 | 1120 | 39 | 65.8 | -0.7 | 13.8 |
| B9 | 1095 | 28 | 58.1 | 2.1 | 19.2 |
| B10 | 1114 | 39 | 65.2 | -0.2 | 13.3 |
| B11 | 1118 | 28 | 57.5 | 2.7 | 18.9 |
| C1 | 1148 | 42 | 97.6 | 1.2 | 3.5 |
| C2 | 1155 | 23 | 57.9 | 5.5 | 21.4 |
| C3 | 1144 | 19 | 55.8 | 4.6 | 20.1 |
| C4 | 1020 | 18 | 89.6 | 0.6 | 8.8 |

(Measurement of shrinkage ratio of layer using each zirconia powder)

Sample layers of a powder layer (green body layer), a zirconia composition layer (calcined body layer) and zirconia layer (sintered body layer) were prepared using each of the above zirconia powders A1 to A6, B1 to B11 and C1 to C4 under the conditions below, and the shrinkage ratios of the sample layers were measured.

[Sample layer for shrinkage ratio measurement]

Die diameter: Φ 25 mm
Mass of powder: 4 g
Forming pressure: Uniaxial press forming: 49 MPa + CIP process: 196 MPa
Forming step: placing raw material powder to be evaluated in die → flattening → uniaxial press forming → CIP process

The sample layers were prepared through the forming step illustrated in Figs. 3 and 4, as described above.
A sample layer of a green body layer composed of the obtained powder layer (powder composition layer) was calcined under the conditions below to obtain a sample layer of a zirconia composition layer (calcined body layer). The sample layer of the zirconia composition layer (calcined body layer) was sintered under the conditions below to obtain a sample layer of a zirconia layer (sintered body layer).

32

[Calcination/sintering conditions]

Calcination: 15°C/hour from room temperature to 300°C, holding at 300°C for five hours, 15°C/hour from 300°C to 700°C, holding at 700°C for one hour, 50°C/hour from 700°C to 1,000°C, holding at 1,000°C for two hours, and cooling in the furnace is subsequently performed.

Sintering: 100°C/hour from room temperature to 1,500°C, holding at 1,500°C for two hours, and cooling in the furnace is subsequently performed.

For each of the sample layers obtained as described above, measurement of the shrinkage ratio was performed.

[Method for evaluating shrinkage ratio]

The diameter of a sample for shrinkage ratio measurement (hereinafter, also referred to as a "sample diameter") was measured with a vernier caliper. The sample diameter was determined by measuring diameters of the sample for shrinkage ratio measurement with a vernier caliper at four points, and calculating the average of the measured values.

The shrinkage ratio was calculated from the following formula (1).

$$\cdot \text{ Shrinkage ratio (\%)} = \{(\text{die diameter: } \Phi \text{ 25 mm} - \text{sample diameter})/\text{die diameter: } \Phi \text{ 25 mm}\} \times 100 \cdots (1)$$

Table 2 shows the measurement results of shrinkage ratio of each of the sample layers of the powder layers (green body layers), the zirconia composition layers (calcined body layers) and the zirconia layers (sintered body layers) prepared using the zirconia powders A1 to A6, B1 to B11 and C1 to C4.

[Table 2]

| Powder number | Shrinkage ratio (%) | | |
|---|---|---|---|
| | Green body layer | Calcined body layer | Sintered body layer |
| A1 | 3.81 | 4.33 | 22.43 |
| A2 | 3.79 | 5.10 | 22.45 |
| A3 | 3.83 | 4.35 | 22.44 |
| A4 | 3.82 | 4.36 | 22.44 |
| A5 | 3.81 | 4.39 | 22.44 |
| A6 | 3.81 | 4.47 | 22.44 |
| B1 | 3.80 | 4.30 | 22.40 |
| B2 | 3.79 | 4.71 | 22.45 |
| B3 | 3.79 | 4.69 | 22.47 |
| B4 | 3.79 | 4.33 | 22.44 |
| B5 | 3.79 | 4.30 | 22.42 |
| B6 | 3.79 | 4.33 | 22.44 |
| B7 | 3.79 | 4.32 | 22.42 |
| B8 | 3.81 | 4.33 | 22.45 |
| B9 | 3.81 | 4.35 | 22.44 |
| B10 | 3.81 | 4.39 | 22.44 |
| B11 | 3.81 | 4.47 | 22.44 |
| C1 | 3.62 | 5.21 | 22.88 |
| C2 | 3.62 | 6.19 | 22.93 |
| C3 | 3.55 | 6.20 | 22.93 |
| C4 | 4.11 | 5.36 | 24.32 |

Example 1

(Green body)

The zirconia powder A1 was placed in a die with an inner diameter of 110 mm in an amount (21 g) that would provide a layer thickness of 1 mm when the powder was formed into a calcined body, and the die was then tapped to form a (i)st powder layer (corresponding to the first layer (21) in Fig. 2). The zirconia powder A2 was placed on the (i)st powder layer in an amount (214 g) that would provide a layer thickness of 10 mm when the powder was formed into a calcined body, and the die was then tapped to form a (ii)nd powder layer (corresponding to the third layer (23) in Fig. 2). The zirconia powder C3 was placed on the (ii)nd powder layer in an amount (214 g) that would provide a layer thickness of 10 mm when the powder was formed into a calcined body, and the die was then tapped to form a (iii)rd powder layer (corresponding to the fourth layer (24) in Fig. 2). The zirconia powder A1 was placed on the (iii)rd powder layer in an amount (21 g) that would provide a layer thickness of 1 mm when the powder was formed into a calcined body, and the die was then tapped to form a (iv)th powder layer (corresponding to the second layer (22) in Fig. 2). Subsequently, the filling of the (i)st powder layer to the (iv)th powder layer was subjected to uniaxial press forming at a pressure of 98 MPa. Subsequently, a CIP process was performed at a pressure of 196 MPa to obtain a layered body composed of four layers, and this layered body was used as a green body according to this Example.

(Calcined body)

The green body was calcined under the calcination conditions below to obtain a layered body, and this layered body was used as a calcined body according to this Example.

[Calcination conditions]

Calcination: 15°C/hour from room temperature to 300°C, holding at 300°C for five hours, 15°C/hour from 300°C to 700°C, holding at 700°C for one hour, 50°C/hour from 700°C to 1,000°C, holding at 1,000°C for two hours, and cooling in the furnace was subsequently performed.

(Sintered body)

The calcined body was sintered under the sintering conditions below to obtain a layered body, and this layered body was used as a sintered body according to this Example.

[Sintering conditions]

Sintering: 100°C/hour from room temperature to 1,500°C, holding at 1,500°C for two hours, and cooling in the furnace was subsequently performed.
The types of powders used in Example 1, the order of stacking of the powders and the conditions of Example 1 are shown in Table 3-1, and the evaluation results are shown in Table 3-2-1. The measurement result of the warpage of the sintered body of Example 1 was less than the measurement limit (0.03 mm).
Note that Table 3-2-1 and Table 3-2-2 are also collectively referred to as Table 3-2.

(Examples 2 to 10)

Layered bodies shown in Table 3-1 were prepared by methods similar to that of Example 1 except that the types of powders used and the order of stacking of the powders used were changed from those in Example 1, as shown in Table 3-1. The evaluation results are shown in Table 3-2 below.

[Table 3-1]

| Example | Powder number | Powder physical properties | | | | | Conditions | |
|---|---|---|---|---|---|---|---|---|
| | | Stabilizing element (mol%) | | | | | | |
| | | Y | Tb | Er | Y+Tb+Er | Uppermost layer - Lowermost layer | Calcined body thickness (mm) | Die diameter (mm) |
| 1 | A1 | 5.50 | | | 5.50 | 0.0 | 1 | 110 |
| | A2 | 5.05 | | 0.15 | 5.20 | | 10 | |
| | C3 | 2.96 | | 0.03 | 2.99 | | 10 | |
| | A1 | 5.50 | | | 5.50 | | 1 | |
| 2 | A1 | 5.50 | | | 5.50 | 0.0 | 4 | 110 |
| | A2 | 5.05 | | 0.15 | 5.20 | | 10 | |
| | C3 | 2.96 | | 0.03 | 2.99 | | 10 | |
| | A1 | 5.50 | | | 5.50 | | 4 | |
| 3 | A1 | 5.50 | | | 5.50 | 0.0 | 8 | 110 |
| | C1 | 3.00 | | | 3.00 | | 8 | |
| | A1 | 5.50 | | | 5.50 | | 8 | |
| 4 | A1 | 5.50 | | | 5.50 | 1.50 | 4 | 110 |
| | A2 | 5.05 | | 0.15 | 5.20 | | 10 | |
| | C3 | 2.96 | | 0.03 | 2.99 | | 10 | |
| | B1 | 4.00 | | | 4.00 | | 4 | |
| 5 | A1 | 5.50 | | | 5.50 | 1.69 | 4 | 110 |
| | A2 | 5.05 | | 0.15 | 5.20 | | 4 | |
| | B2 | 3.80 | | 0.10 | 3.90 | | 5 | |
| | B3 | 3.63 | | 0.18 | 3.81 | | 5 | |
| 6 | A1 | 5.50 | | | 5.50 | 1.55 | 4 | 110 |
| | A2 | 5.05 | | 0.15 | 5.20 | | 4 | |
| | B4 | 3.81 | 0.005 | 0.12 | 3.94 | | 5 | |
| | B5 | 3.57 | 0.012 | 0.37 | 3.95 | | 5 | |
| 7 | A1 | 5.50 | | | 5.50 | 1.55 | 4 | 110 |
| | A2 | 5.05 | | 0.15 | 5.20 | | 4 | |
| | B6 | 3.82 | 0.005 | 0.10 | 3.93 | | 5 | |
| | B7 | 3.62 | 0.021 | 0.31 | 3.95 | | 5 | |
| 8 | A3 | 5.20 | | | 5.20 | 1.22 | 4 | 110 |
| | A4 | 4.90 | | 0.13 | 5.03 | | 4 | |
| | B8 | 3.84 | | 0.12 | 3.96 | | 5 | |
| | 89 | 3.72 | | 0.26 | 3.98 | | 5 | |
| 9 | A5 | 5.20 | | | 5.20 | 1.22 | 4 | 110 |
| | A6 | 4.90 | | 0.13 | 5.03 | | 4 | |
| | B8 | 3.84 | | 0.12 | 3.96 | | 5 | |
| | B9 | 3.72 | | 0.26 | 3.98 | | 5 | |

(continued)

| Example | Powder number | Powder physical properties | | | | | Conditions | |
| --- | --- | --- | --- | --- | --- | --- | --- | --- |
| | | Stabilizing element (mol%) | | | | Uppermost layer - Lowermost layer | Calcined body thickness (mm) | Die diameter (mm) |
| | | Y | Tb | Er | Y+Tb+ Er | | | |
| 10 | A3 | 5.20 | | | 5.20 | 1.22 | 4 | 110 |
| | A4 | 4.90 | | 0.13 | 5.03 | | 4 | |
| | B10 | 3.84 | | 0.12 | 3.96 | | 5 | |
| | B11 | 3.72 | | 0.26 | 3.98 | | 5 | |

[Table 3-2-1]

| Exam-ple | Pow-der num-ber | Diameter (mm) | | | Warpage (mm) | | | Amount of deformation | | | Shrinkage ratio (%) | | | Difference in shrinkage ratio (%): Uppermost layer - Lowermost layer | | | Difference in color tone | |
|---|---|---|---|---|---|---|---|---|---|---|---|---|---|---|---|---|---|---|
| | | Green | Cal-cined | Sin-tered | Green | Cal-cined | Sin-tered | Green | Cal-cined | Sin-tered | Green | Cal-cined | Sin-tered | Green | Cal-cined | Sin-tered | ΔL* | ΔC* |
| 1 | A1 | 105.9 | 104.5 | 85.2 | Less than 0.03 | 0.15 | Less than 0.03 | Less than 0.03 | 0.14 | Less than 0.04 | 3.81 | 4.33 | 22.43 | 0.00 | 0.00 | 0.00 | 25.4 | 11.6 |
| | A2 | | | | | | | | | | 3.79 | 5.10 | 22.45 | | | | 0.9 | 7.4 |
| | C3 | | | | | | | | | | 3.55 | 6.20 | 22.93 | | | | 26.3 | 19.0 |
| | A1 | | | | | | | | | | 3.81 | 4.33 | 22.43 | | | | | |
| 2 | A1 | 105.9 | 104.5 | 85.2 | Less than 0.03 | Less than 0.03 | Less than 0.03 | Less than 0.03 | Less than 0.03 | Less than 0.04 | 3.81 | 4.33 | 22.43 | 0.00 | 0.00 | 0.00 | 25.4 | 11.6 |
| | A2 | | | | | | | | | | 3.79 | 5.10 | 22.45 | | | | 0.9 | 7.4 |
| | C3 | | | | | | | | | | 3.55 | 6.20 | 22.93 | | | | 26.3 | 19.0 |
| | A1 | | | | | | | | | | 3.81 | 4.33 | 22.43 | | | | | |
| 3 | A1 | 105.9 | 104.9 | 85.2 | Less than 0.03 | Less than 0.03 | Less than 0.03 | Less than 0.03 | Less than 0.03 | Less than 0.04 | 3.81 | 4.33 | 22.43 | 0.00 | 0.00 | 0.00 | 15.5 | 2.1 |
| | C1 | | | | | | | | | | 3.62 | 5.21 | 22.88 | | | | 15.5 | 2.1 |
| | A1 | | | | | | | | | | 3.81 | 4.33 | 22.43 | | | | | |
| 4 | A1 | 105.9 | 104.5 | 85.2 | Less than 0.03 | Less than 0.03 | Less than 0.03 | Less than 0.03 | Less than 0.03 | Less than 0.04 | 3.81 | 4.33 | 22.43 | 0.01 | 0.03 | 0.03 | 25.4 | 11.6 |
| | A2 | | | | | | | | | | 3.79 | 5.10 | 22.45 | | | | 0.9 | 7.4 |
| | C3 | | | | | | | | | | 3.55 | 6.20 | 22.93 | | | | 18.6 | 19.5 |
| | B1 | | | | | | | | | | 3.80 | 4.30 | 22.40 | | | | | |
| 5 | A1 | 105.8 | 104.8 | 85.3 | Less than 0.03 | 0.31 | Less than 0.03 | Less than 0.03 | 0.30 | Less than 0.04 | 3.81 | 4.33 | 22.43 | 0.02 | 0.36 | 0.04 | 25.4 | 11.6 |
| | A2 | | | | | | | | | | 3.79 | 5.10 | 22.42 | | | | 8.1 | 0.6 |
| | B2 | | | | | | | | | | 3.79 | 4.71 | 22.45 | | | | 7.9 | 5.3 |
| | B3 | | | | | | | | | | 3.79 | 4.69 | 22.47 | | | | | |

EP 4 480 935 A1

[Table 3-2-2]

| Exam-ple | Pow-der num-ber | Properties | | | | | | | | | | | | | | | | |
|---|---|---|---|---|---|---|---|---|---|---|---|---|---|---|---|---|---|---|
| | | Diameter (mm) | | | Warpage (mm) | | | Amount of deformation | | | Shrinkage ratio (%) | | | Difference in shrinkage ratio (%): Uppermost layer - Lowermost layer | | | Difference in color tone | |
| | | Green | Cal-cined | Sin-tered | Green | Cal-cined | Sin-tered | Green | Cal-cined | Sin-tered | Green | Cal-cined | Sin-tered | Green | Cal-cined | Sin-tered | $\Delta L^*$ | $\Delta C^*$ |
| 6 | A1 | 105.8 | 105.3 | 85.3 | Less than 0.03 | Less than 0.03 | Less than 0.03 | Less than 0.03 | Less than 0.03 | Less than 0.04 | 3.81 | 4.33 | 22.43 | 0.02 | 0.03 | 0.01 | 25.4 | 11.6 |
| | A2 | | | | | | | | | | 3.80 | 4.30 | 22.44 | | | | 8.7 | 4.1 |
| | B4 | | | | | | | | | | 3.79 | 4.33 | 22.44 | | | | 9.9 | 7.6 |
| | B5 | | | | | | | | | | 3.79 | 4.30 | 22.42 | | | | | |
| 7 | A1 | 105.8 | 105.2 | 85.3 | Less than 0.03 | Less than 0.03 | Less than 0.03 | Less than 0.03 | Less than 0.03 | Less than 0.04 | 3.81 | 4.33 | 22.43 | 0.02 | 0.01 | 0.01 | 25.4 | 11.6 |
| | A2 | | | | | | | | | | 3.80 | 4.30 | 22.44 | | | | 7.8 | 2.0 |
| | B6 | | | | | | | | | | 3.79 | 4.33 | 22.44 | | | | 9.9 | 1.0 |
| | B7 | | | | | | | | | | 3.79 | 4.32 | 22.42 | | | | | |
| 8 | A3 | 105.8 | 105.2 | 85.3 | Less than 0.03 | Less than 0.03 | Less than 0.03 | Less than 0.03 | Less than 0.03 | Less than 0.04 | 3.83 | 4.35 | 22.44 | 0.02 | 0.00 | 0.00 | 25.5 | -11.4 |
| | A4 | | | | | | | | | | 3.82 | 4.36 | 22.44 | | | | -8.9 | -0.6 |
| | B8 | | | | | | | | | | 3.81 | 4.33 | 22.45 | | | | 7.7 | -5.5 |
| | B9 | | | | | | | | | | 3.81 | 4.35 | 22.44 | | | | | |
| 9 | A5 | 105.8 | 105.2 | 85.3 | Less than 0.03 | Less than 0.03 | Less than 0.03 | Less than 0.03 | Less than 0.03 | Less than 0.04 | 3.82 | 4.37 | 22.44 | 0.01 | 0.02 | 0.00 | 25.6 | -12.2 |
| | A6 | | | | | | | | | | 3.82 | 4.39 | 22.44 | | | | -8.7 | -0.1 |
| | B8 | | | | | | | | | | 3.81 | 4.33 | 22.45 | | | | 7.7 | -5.5 |
| | B9 | | | | | | | | | | 3.81 | 4.35 | 22.44 | | | | | |
| 10 | A3 | 105.8 | 105.2 | 85.3 | Less than 0.03 | 0.10 | Less than 0.03 | Less than 0.03 | 0.10 | Less than 0.04 | 3.83 | 4.35 | 22.44 | 0.02 | 0.12 | 0.00 | 25.5 | -11.4 |
| | A4 | | | | | | | | | | 3.82 | 4.36 | 22.44 | | | | -8.3 | -0.1 |
| | B10 | | | | | | | | | | 3.81 | 4.39 | 22.44 | | | | 7.7 | -5.8 |
| | B11 | | | | | | | | | | 3.81 | 4.47 | 22.44 | | | | | |

In Table 3-2, the expression "less than 0.03 mm" in the measurement result of the warpage means less than the measurement limit 0.03 mm, the expression "less than 0.03 mm" in the columns of Green and Calcined of the amount of deformation means less than the measurement limit 0.03 mm, and the expression "less than 0.04 mm" in the column of Sintered of the amount of deformation means less than the measurement limit 0.04 mm.

(Comparative Examples 1 to 7)

Layered bodies shown in Table 4-1 were prepared by methods similar to that of Example 1 except that the types of powders used and the order of stacking of the powders used were changed from those in Example 1, as shown in Table 4-1 below. The evaluation results are shown in Table 4-2 below.

[Table 4-1]

| Comparative Example | Powder number | Powder physical properties | | | | | Conditions | |
| | | Stabilizing element (mol%) | | | | | | |
| | | Y | Tb | Er | Y +Tb+ Er | Uppermost layer - Lowermost layer | Calcined body thickness (mm) | Die diameter (mm) |
| 1 | A1 | 5.50 | | | 5.50 | 2.50 | 1 | 110 |
| | A2 | 5.05 | | 0.15 | 5.20 | | 10 | |
| | C3 | 2.96 | | 0.03 | 2.99 | | 10 | |
| | C1 | 3.00 | | | 3.00 | | 1 | |
| 2 | A1 | 5.50 | | | 5.50 | 2.50 | 4 | 110 |
| | A2 | 5.05 | | 0.15 | 5.20 | | 10 | |
| | C3 | 2.96 | | 0.03 | 2.99 | | 10 | |
| | C1 | 3.00 | | | 3.00 | | 4 | |
| 3 | A1 | 5.50 | | | 5.50 | 2.50 | 8 | 110 |
| | C1 | 3.00 | | | 3.00 | | 8 | |
| 4 | A1 | 5.50 | | | 5.50 | 2.49 | 4 | 110 |
| | A2 | 5.05 | | 0.15 | 5.20 | | 4 | |
| | B2 | 3.80 | | 0.10 | 3.90 | | 5 | |
| | C2 | 2.84 | | 0.17 | 3.01 | | 5 | |
| 5 | A1 | 5.50 | | | 5.50 | 2.51 | 1 | 110 |
| | A2 | 5.05 | | 0.15 | 5.20 | | 10 | |
| | C3 | 2.96 | | 0.03 | 2.99 | | 10 | |
| 6 | A1 | 5.50 | | | 5.50 | 2.51 | 4 | 110 |
| | A2 | 5.05 | | 0.15 | 5.20 | | 10 | |
| | C3 | 2.96 | | 0.03 | 2.99 | | 10 | |
| 7 | A1 | 5.50 | | | 5.50 | 2.50 | 8 | 110 |
| | C1 | 3.00 | | | 3.00 | | 8 | |
| | C4 | 3.00 | | | 3.00 | | 8 | |

[Table 4-2]

| Comparative Example | Powder number | Properties | | | | | | | | | | | | | | | | | |
|---|---|---|---|---|---|---|---|---|---|---|---|---|---|---|---|---|---|---|---|
| | | Diameter (mm) | | | Warpage (mm) | | | Amount of deformation | | | Shrinkage ratio (%) | | | Difference in shrinkage ratio (%): Uppermost layer - Lowermost layer | | | Difference in color tone | |
| | | Green | Calcined | Sintered | Green | Calcined | Sintered | Green | Calcined | Sintered | Green | Calcined | Sintered | Green | Calcined | Sintered | ΔL* | ΔC* |
| 1 | A1 | 105.9 | 104.3 | 85.1 | 0.12 | 2.01 | 0.80 | 0.11 | 1.93 | 0.94 | 3.81 | 4.33 | 22.43 | 0.19 | 0.88 | 0.45 | 25.4 | 11.6 |
| | A2 | | | | | | | | | | 3.79 | 5.10 | 22.45 | | | | 0.9 | 7.4 |
| | C3 | | | | | | | | | | 3.55 | 6.20 | 22.93 | | | | 41.8 | 16.9 |
| | C1 | | | | | | | | | | 3.62 | 5.21 | 22.88 | | | | | |
| 2 | A1 | 105.9 | 104.3 | 85.1 | 0.10 | 1.99 | 0.75 | 0.09 | 1.91 | 0.88 | 3.81 | 4.33 | 22.43 | 0.19 | 0.88 | 0.45 | 25.4 | 11.6 |
| | A2 | | | | | | | | | | 3.79 | 5.10 | 22.45 | | | | 0.9 | 7.4 |
| | C3 | | | | | | | | | | 3.55 | 6.20 | 22.93 | | | | 41.8 | 16.9 |
| | C1 | | | | | | | | | | 3.62 | 5.21 | 22.88 | | | | | |
| 3 | A1 | 105.9 | 104.8 | 85.1 | 0.10 | 1.77 | 1.03 | 0.09 | 1.69 | 1.21 | 3.81 | 4.33 | 22.43 | 0.19 | 0.88 | 0.45 | 15.5 | 2.1 |
| | C1 | | | | | | | | | | 3.62 | 5.21 | 22.88 | | | | | |
| 4 | A1 | 105.9 | 104.4 | 85.2 | 0.12 | 2.75 | 0.98 | 0.11 | 2.63 | 1.15 | 3.81 | 4.33 | 22.43 | 0.19 | 1.86 | 0.50 | 25.4 | 11.6 |
| | A2 | | | | | | | | | | 3.79 | 5.10 | 22.45 | | | | 8.1 | 0.6 |
| | B2 | | | | | | | | | | 3.79 | 4.71 | 22.45 | | | | 6.9 | 8.3 |
| | C2 | | | | | | | | | | 3.62 | 6.19 | 22.93 | | | | | |
| 5 | A1 | 105.9 | 104.3 | 85.1 | 0.15 | 2.85 | 1.25 | 0.14 | 2.73 | 1.47 | 3.81 | 4.33 | 22.43 | 0.26 | 1.87 | 0.50 | 25.4 | 11.6 |
| | A2 | | | | | | | | | | 3.79 | 5.10 | 22.45 | | | | 0.9 | 7.4 |
| | C3 | | | | | | | | | | 3.55 | 6.20 | 22.93 | | | | | |
| 6 | A1 | 105.9 | 104.3 | 85.1 | 0.10 | 2.83 | 1.23 | 0.09 | 2.71 | 1.44 | 3.81 | 4.33 | 22.43 | 0.26 | 1.87 | 0.50 | 25.4 | 11.6 |
| | A2 | | | | | | | | | | 3.79 | 5.10 | 22.45 | | | | 0.9 | 7.4 |
| | C3 | | | | | | | | | | 3.55 | 6.20 | 22.93 | | | | | |

(continued)

| Comparative Example | Powder number | Properties | | | | | | | | | | | | | | | | |
|---|---|---|---|---|---|---|---|---|---|---|---|---|---|---|---|---|---|---|
| | | Diameter (mm) | | | Warpage (mm) | | | Amount of deformation | | | Shrinkage ratio (%) | | | Difference in shrinkage ratio (%): Uppermost layer - Lowermost layer | | | Difference in color tone | |
| | | Green | Calcined | Sintered | Green | Calcined | Sintered | Green | Calcined | Sintered | Green | Calcined | Sintered | Green | Calcined | Sintered | ΔL* | ΔC* |
| 7 | A1 | 105.8 | 104.5 | 84.5 | 0.18 | 1.85 | 3.92 | 0.17 | 1.77 | 4.64 | 3.81 | 4.33 | 22.43 | 0.30 | 1.03 | 1.89 | 15.5 | 2.1 |
| | C1 | | | | | | | | | | 3.62 | 5.21 | 22.88 | | | | 8.0 | 5.1 |
| | C4 | | | | | | | | | | 4.11 | 5.36 | 24.32 | | | | | |

**EP 4 480 935 A1**

As is clear from the results of Examples, when the value of the stabilizing element content in the first region (for example, the lowermost layer) located at one end of the layered body and the value of the stabilizing element content in the second region (for example, the uppermost layer) located at the other end are made close to each other (specifically, 2.0 mol% or less), warpage of the sintered body can be reduced, and it is possible to produce a sintered body with less deformation while having gradations of translucency and a color tone close to those of natural teeth.

In addition, as is clear from the results of Examples, when the value of the shrinkage ratio in the first region (for example, the lowermost layer) located at one end of the layered body and the value of the shrinkage ratio in the second region (for example, the uppermost layer) located at the other end are made close to each other (specifically, 0.4% or less), warpage of the sintered body can be reduced, and it is possible to produce a sintered body with less deformation while having gradations of translucency and a color tone close to those of natural teeth.

The entire contents of the description, claims, drawings and abstract of Japanese Patent Application No. 2022-024064 filed on February 18, 2022 are hereby incorporated by reference as the disclosure of the description of the present disclosure.

Reference Signs List

100, 200, 500, 600: zirconia sintered body
11, 21: first layer
12, 22: second layer
13, 23: third layer
24: fourth layer
31: powder composition
32: die
33: uniaxial press forming
41: powder that has been subjected to uniaxial press forming
42: solvent
51: horizontal plate
52A, 52B: thickness gauge
53: size of sintered body
61: load
62: support span
71: zirconia having necking structure
81: powder composition
82: die
83: uniaxial press forming
91: powder that has been subjected to uniaxial press forming (layered body)
92: solvent

**Claims**

1. A sintered body of zirconia,

   wherein the zirconia contains (i) stabilizing element-containing zirconia or (ii) zirconia containing stabilizing element-containing zirconia and a coloring element,
   the sintered body has three or more regions stacked in a layered manner, two adjacent regions among the regions differ from each other in at least one of stabilizing element content and coloring element content, and
   a difference between the stabilizing element content in a first region located at one end among the stacked regions and the stabilizing element content in a second region located at the other end is 2.0 mol% or less.

2. The sintered body according to Claim 1, wherein a third region stacked between the first region and the second region in a layered manner includes one or more regions.

3. The sintered body according to Claim 2, wherein the third region includes two or more regions, and an increasing or decreasing tendency of at least one of translucency and a color tone does not change in a stacking direction from the first region to the third region or from the second region to the third region.

42

4. A sintered body of zirconia,

   wherein the zirconia contains (i) stabilizing element-containing zirconia or (ii) zirconia containing stabilizing element-containing zirconia and a coloring element,
   the sintered body has three or more regions stacked in a layered manner, two adjacent regions among the regions differ from each other in at least one of stabilizing element content and coloring element content, and
   a difference between a shrinkage ratio of the sintered body in a first region located at one end among the stacked regions and a shrinkage ratio of the sintered body in a second region located at the other end (difference in shrinkage ratio) is 0.4% or less.

5. The sintered body according to Claim 4, wherein a third region stacked between the first region and the second region in a layered manner includes one or more regions.

6. The sintered body according to Claim 5, wherein the third region includes two or more regions, and an increasing or decreasing tendency of at least one of translucency and a color tone does not change in a stacking direction from the first region to the third region or from the second region to the third region.

7. A calcined body of a zirconia composition,

   wherein the zirconia composition contains (iii) a stabilizing element-containing zirconia composition having a necking structure or (iv) a zirconia composition containing stabilizing element-containing zirconia having a necking structure and a coloring element,
   the calcined body has three or more regions stacked in a layered manner, two adjacent regions among the regions differ from each other in at least one of stabilizing element content and coloring element content, and
   a difference between the stabilizing element content in a first region located at one end among the stacked regions and the stabilizing element content in a second region located at the other end is 2.0 mol% or less.

8. The calcined body according to Claim 7, wherein a third region stacked between the first region and the second region in a layered manner includes one or more regions.

9. The calcined body according to Claim 8, wherein the third region includes two or more regions, and an increasing or decreasing tendency of a color tone does not change in a stacking direction from the first region to the third region or from the second region to the third region.

10. A calcined body of a zirconia composition,

    wherein the zirconia composition contains (iii) a stabilizing element-containing zirconia composition having a necking structure or (iv) a zirconia composition containing stabilizing element-containing zirconia having a necking structure and a coloring element,
    the calcined body has three or more regions stacked in a layered manner, two adjacent regions among the regions differ from each other in at least one of stabilizing element content and coloring element content, and
    a difference between a shrinkage ratio of the calcined body in a first region located at one end among the stacked regions and a shrinkage ratio of the calcined body in a second region located at the other end (difference in shrinkage ratio) is 0.4% or less.

11. The calcined body according to Claim 10, wherein a third region stacked between the first region and the second region in a layered manner includes one or more regions.

12. The calcined body according to Claim 11, wherein the third region includes two or more regions, and an increasing or decreasing tendency of a color tone does not change in a stacking direction from the first region to the third region or from the second region to the third region.

13. A method for producing the sintered body according to any one of Claims 1 to 6, the method comprising:
    a step of sintering, at 1,200°C or higher and 1,600°C or lower, a green body in which three or more powder composition layers composed of a zirconia raw material powder containing stabilizing element-containing zirconia and, if a coloring element is contained, the coloring element are stacked.

14. A method for producing the sintered body according to any one of Claims 1 to 6, the method comprising:

a step of calcining, at 800°C or higher and lower than 1,200°C, a green body in which three or more powder composition layers composed of a zirconia raw material powder containing stabilizing element-containing zirconia and, if a coloring element is contained, the coloring element are stacked to obtain a calcined body; and a step of sintering the calcined body at 1,200°C or higher and 1,600°C or lower.

15. A method for producing the calcined body according to any one of Claims 7 to 12, the method comprising:
a step of calcining, at 800°C or higher and lower than 1,200°C, a green body in which three or more powder composition layers composed of a zirconia raw material powder containing stabilizing element-containing zirconia and, if a coloring element is contained, the coloring element are stacked.

16. A dental material comprising the sintered body according to any one of Claims 1 to 6.

17. A dental material comprising the calcined body according to any one of Claims 7 to 12.

FIG. 1

100

Y
X

12
13
11

FIG. 2

200

Y
X

22
24
23
21

## FIG. 3

(a)　　　　　　　　(b)　　　　　　　　(c )

## FIG. 4

FIG. 5

FIG. 6

# FIG. 7

# FIG. 8

(a)          (b)          (c)          (d)

FIG. 9

## INTERNATIONAL SEARCH REPORT

| International application No. |
| --- |
| **PCT/JP2023/005481** |

### A. CLASSIFICATION OF SUBJECT MATTER

*C04B 35/488*(2006.01)i; *A61C 5/77*(2017.01)i; *A61C 13/083*(2006.01)i
FI: C04B35/488; A61C5/77; A61C13/083

According to International Patent Classification (IPC) or to both national classification and IPC

### B. FIELDS SEARCHED

Minimum documentation searched (classification system followed by classification symbols)

C04B35/488; A61C5/77; A61C13/083

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JST7580/JSTChina (JDreamIII)

### C. DOCUMENTS CONSIDERED TO BE RELEVANT

| Category* | Citation of document, with indication, where appropriate, of the relevant passages | Relevant to claim No. |
| --- | --- | --- |
| X | WO 2022/004862 A1 (KURARAY NORITAKE DENTAL INC) 06 January 2022 (2022-01-06)<br>claims 1, 24 | 1-17 |
| X | JP 2020-147495 A (TOSOH CORP) 17 September 2020 (2020-09-17)<br>claims 1-5 | 7-9 |
| A | JP 2019-515030 A (3M INNOVATIVE PROPERTIES COMPANY) 06 June 2019 (2019-06-06)<br>claims 1-15 | 1-17 |

☐ Further documents are listed in the continuation of Box C.   ☑ See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **13 April 2023** | **25 April 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/005481**

| Patent document cited in search report | | | Publication date (day/month/year) | Patent family member(s) | | | Publication date (day/month/year) |
|---|---|---|---|---|---|---|---|
| WO | 2022/004862 | A1 | 06 January 2022 | (Family: none) | | | |
| JP | 2020-147495 | A | 17 September 2020 | US | 2020/0283341 | A1 | |
| | | | | claims 1-5 | | | |
| | | | | EP | 3705081 | A1 | |
| | | | | CN | 111658552 | A | |
| JP | 2019-515030 | A | 06 June 2019 | US | 2019/0231494 | A1 | |
| | | | | claims 1-15 | | | |
| | | | | EP | 3108849 | A1 | |
| | | | | CN | 109069239 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160157971
- US 20140328746
- US 20150173869
- JP 2022024064 A